# EUROPEAN PATENT APPLICATION

(11) **EP 4 794 248 A1**
(43) Date of publication of application: **19.08.2026**
(21) Application number: 25305203.9
(22) Date of filing: 14.02.2025
(51) Int. Cl.: H04L 9/00, H04L 9/06

(54) **METHOD FOR SECURING SM4 CRYPTOGRAPHIC PROCESS AGAINST SIDE-CHANNEL ATTACKS**

(71) Applicant: THALES DIS FRANCE SAS, 92190 Meudon (FR)
(72) Inventor: DEVARA, Kresna, Singapore 120354 (SG)
(74) Representative: Bricks, Amélie

(57) **Abstract**

The present invention relates to a method for protecting the execution of SM4 cryptographic process against side-channel attacks by applying 32-bits masks to the inputs of the cryptographic operation and to the round keys. In order to make such a masking compatible with the 8-bit Sbox used by the tau transformation, the present invention generates all masks for all inputs and round keys from a single mask by applying to it a circular permutation shifting the mask to the right or the left by n*8 bits, with n in {0, ...,31} to get masked input values X' and masked round keys RK' such that when computing the value *X'*_{*i+*1}⊕*X'*_{*i*+2}*⊕X'*_{*i*+3}*⊕RK'ᵢ* the result will be a 32-bits word composed of four 8-bit chunks all masked by the same mask *M*₀*ₓₒᵣ.* Then the invention replaces the Sbox to be used in SM4 algorithm by a masked Sbox, called SboxM incorporating *M*_{0*xor*} as input mask and another predefined mask as output mask.

## Description

### FIELD OF THE INVENTION

The present invention relates to the field of block cipher encryption, and of associated cryptographic devices, and more particularly to a method for protecting the execution of SM4 cryptographic process against side-channel attacks.

### BACKGROUND OF THE INVENTION

Cryptographic algorithms are commonly used for ensuring the privacy of communications by encryption, for authentication or for generating a verifiable signature. An example of such algorithms is block cipher algorithms such as DES or AES, in which input bits of data to be encrypted or decrypted are processed by blocks. Cipher block algorithms often perform encryption or decryption by applying several encryption or decryption rounds. Each round usually involves a substitution box, called Sbox, in order to bring non-linearity to the process and therefore to increase security.

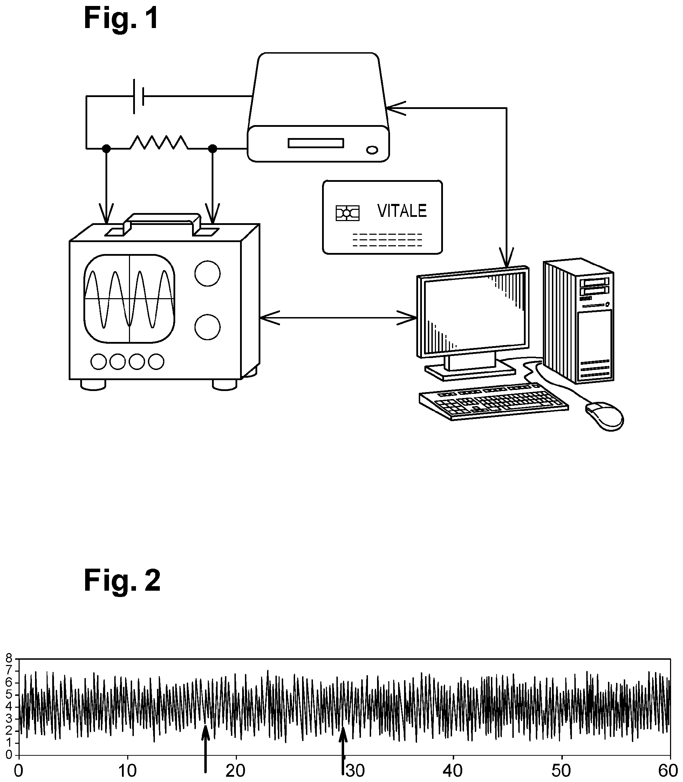

SM4 is a block cipher algorithm published by China which is currently used or available in a large variety of cryptographic devices and solutions. SM4, like other cryptographic algorithms, is sensitive to side-channel attacks, based on an analysis of for example the power consumption or electromagnetic signature of the device performing the encryption, as depicted on **Figure 1****.** A particular type of side-channel attack is Differential Power Analysis (DPA) that performs a statistical analysis of the power consumption on several encryption rounds in order to recover at least some part of the secret key used for the encryption, as depicted on **Figure 2****.**

A commonly used countermeasure against side-channel attacks such as DPA is the masking of the input values of an encryption process with a random mask. In that case, an attacker performing a side-channel attack at a given point of the encryption process would only get random values and would not obtain any information on the secret key used for the cryptographic process. Nevertheless, SM4 encryption and decryption processes, though processing input words of 32 bits, comprise a computation step in which each word is split into four 8-bit chunk and each chunk is applied a Sbox. Such a computation being non-linear, a 32-bit mask applied to an input word cannot be carried through the whole encryption process.

It remains possible to reduce the masking to 8-bit masks before the non-linear operation but such a low size masking would be much easier to defeat for an attacker.

Consequently, there is a need for an implementation of SM4 block cipher algorithm more efficiently protected against side-channel attacks than implementations of SM4 using only a 8-bit masking.

### SUMMARY OF THE INVENTION

For this purpose and according to a first aspect, this invention therefore relates to a method for securing against side channel attacks an electronic device (300) executing a SM4 encryption algorithm encrypting a 128-bit plaintext input $\left({X}_{0}\left|{X}_{1}\left|{X}_{2}\left|{X}_{3}\right.\right.\right.\right) ∈ {\left({Z}_{2}^{32}\right)}^{4}$ to obtain a 128-bit ciphertext output (Y₀| $\left.{Y}_{1}\left|{Y}_{2}\left|{Y}_{3}\right.\right.\right) ∈ {\left({Z}_{2}^{32}\right)}^{4}$ using, in 32 encryption rounds, round keys ${RK}_{i} ∈ {Z}_{2}^{32}$, i= {0, ...,31} and a substitution box function Sbox,
said electronic device comprising a processing system and a computer readable memory circuit storing masked SM4 round keys RK'i,
wherein the first round key RK₀ is masked with a first mask M₀ composed of four first mask bytes *m*_{0,0}; *m*_{0,1}; *m*_{0,2}; *m*_{0,3} such that *M*₀ = {*m*_{0, 3} |*m*_{0,0} |*m*_{0,1} |*m*_{0,2}},
and wherein each of the other round keys RKᵢ is masked with a mask equal to a result of applying a first circular permutation to the four mask bytes of the mask used to mask the previous round key RKᵢ₋₁, shifting it by 8 bits to the left, said processing system of the electronic device performing the following steps:
   - acquiring said plaintext input (X₀| X₁| X₂| X₃);
   - applying to said acquired plaintext input : (X₀ = {*x*_{0,0}|*x*_{0,1}|*x*_{0,2}|*x*_{0,3}}, *X*₁ = {*x*_{1,0}|*x*_{1,1}|*x*_{1,2}|*x*_{1,3}}, *X*₂ = {*x*_{2,0}|*x*_{2,1}|*x*_{2,2}|*x*_{2,3}}, *X*₃ = {*x*_{3,0}|*x*_{3,1}|*x*_{3,2}|*x*_{3,3}}) a masking using said four first mask bytes to obtain a masked plaintext input (X'₀ |X'₁| X'₂| X'₃) such that $X {′}_{0} = \left\{{x}_{0 , 0}⊕{m}_{0 , 3}\left|{x}_{0 , 1}⊕{m}_{0 , 0}\right.\left|{x}_{0 , 2}⊕{m}_{0 , 1}\right.\left|{x}_{0 , 3}⊕{m}_{0 , 2}\right.\right\}$ $X {′}_{1} = \left\{{x}_{1 , 0}⊕{m}_{0 , 0}\left|{x}_{1 , 1}⊕{m}_{0 , 1}\right.\left|{x}_{1 , 2}⊕{m}_{0 , 2}\right.\left|{x}_{1 , 3}⊕{m}_{0 , 3}\right.\right\}$ $X {′}_{2} = \left\{{x}_{2 , 0}⊕{m}_{0 , 1}\left|{x}_{2 , 1}⊕{m}_{0 , 2}\right.\left|{x}_{2 , 2}⊕{m}_{0 , 3}\right.\left|{x}_{2 , 3}⊕{m}_{0 , 0}\right.\right\}$ $X {′}_{3} = \left\{{x}_{3 , 0}⊕{m}_{0 , 2}\left|{x}_{3 , 1}⊕{m}_{0 , 3}\right.\left|{x}_{3 , 2}⊕{m}_{0 , 0}\right.\left|{x}_{3 , 3}⊕{m}_{0 , 1}\right.\right\} ;$
   - performing 32 rounds of calculation using as input said masked plaintext input, by executing at each round i, i= {0, ...,31}:
      ∘ computing an intermediate result *X'ᵢ*⊕*T*(*X'*_{*i+*1}⊕*X'*_{*i+*2}⊕*X'*_{*i+*3}⊕*RK'ᵢ*), where T is a reversible permutation that outputs 32 bits from a 32-bit input by composing a linear transformation L and a nonlinear transformation tau, where the nonlinear transformation tau transforms any 32-bit input A'= (a'₀| a'₁| a'₂| a'₃) into a 32-bit output tau(A') = B' = (b'₀| b'₁| b'₂| b'₃) = (SboxM(a'₀)| SboxM(a'₁)| SboxM(a'₂)| SboxM(a'₃)),

      where SboxM is said substitution function Sbox masked using said four first mask bytes *m*_{0,0}; *m*_{0,1}; *m*_{0,2}; *m*_{0,3} of the first mask Mo, a second mask M₁ composed of four second mask bytes *m*_{1,0}; *m*_{1,1}; *m*_{1,2}; *m*_{1,3} such that M₁ = {*m*_{1,0}|*m*_{1,1} |*m*_{1,2}|*m*_{1,3}}, and a third mask M₂ such that for any 8-bit input x:$SboxM \left[x⊕{M}_{0 xor}\right] = Sbox \left[x\right] ⊕ {M}_{1 xor} ⊕ {m}_{sbox ,}$
         with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕*m*_{1,3}, *m_{sbox}* = *M*₂[(*x*⊕*M*_{0*xor*})&3], & being the BITWISE AND logical operator,
         and where the linear transformation L transforms any 32-bit input B into a 32-bit output *L(B) = B* ⊕ (*B <<<* 2) ⊕ (*B <<<* 10) ⊕ *(B* <<< 18) ⊕ (*B* <<< 24) with B <<< k a 32-bit bitwise cyclic shift of B with k bits shifted left;
      o performing a partial unmasking of said intermediate result to obtain *X*'_{*i*+4} the output of round i of SM4 encryption algorithm when applied to said plaintext input, masked by a mask composed of said four first mask bytes, such that:
         *X'*₄ *is masked with* {*m*_{0,3} |*m*_{0,0}|*m*_{0,1}|*m*_{0,2}}
         *X'*₅ *is masked with* {*m*_{0,0}|*m*_{0,1}|*m*_{0,2}|*m*_{0,3}}
         *X'*₆ *is masked with* {*m*_{0,1}|*m*_{0,2}|*m*_{0,3}|*m*_{0,0}} ...
         *X'*₃₂ *is masked with* {*m*_{0,3}|*m*_{0,0}|*m*_{0,1}|*m*_{0,2}}
         *X'*₃₃ *is masked with* {*m*_{0,0}|*m*_{0,1}|*m*_{0,2}|*m*_{0,3}}
         *X'*₃₄ *is masked with* {*m*_{0,1}|*m*_{0,2}|*m*_{0,3}|*m*_{0,0}}
         *X'*₃₅ *is masked with* {*m*_{0,2}|*m*_{0,3}|*m*_{0,0}|*m*_{0,1}};
   - generating said ciphertext output *Y*₀, *Y*₁, *Y*₂, *Y*₃ by applying to the outputs of the four last rounds *X'*₃₂, *X'*₃₃, *X'*₃₄, *X'*₃₅ a reverse transformation R and an unmasking of *X'*₃₂ using a mask {*m*_{0,3}|*m*_{0,0}|*m*_{0*,*1}|*m*_{0,2}}, an unmasking of *X'*₃₃ using a mask {*m*_{0,0}|*m*_{0,1}|*m*_{0,2}|*m*_{0,3}}, an unmasking of *X'*₃₄ using a mask {*m*_{0,1}|*m*_{0,2}|*m*_{0,3}|*m*_{0*,*0}} and an unmasking of *X'*₃₅ using a mask {*m*_{0,2}|*m*_{0,3}|*m*_{0,0}|*m*_{0*,*1}},
wherein the reverse transformation R transforms any 128-bit input composed of four 32-bits words (A₀| A₁| A₂| A₃) into a 128-bit output (A₃| A₂| A₁| A₀).

By doing so, any 32-bit word processed throughout the encryption process from the cleartext input to the ciphertext output remains masked by a 32-bit mask

The step of computing an intermediate result may comprise:
- computing a partial intermediate result by applying said nonlinear transformation tau to *X'*_{*i+*1}⊕*X'*_{*i+*2}⊕*X'*_{*i+*3}⊕*RK'ᵢ* ;
- computing a transformed partial intermediate result by applying to each byte of the partial intermediate result a mask switch replacing in said byte the mask *M*_{1*xor*} by *m*_{1,(*i+b*) modulo 4} where b is a byte index of said byte;
- applying said linear transformation L to said transformed partial intermediate result and xoring the output of said linear transformation L with *X'ᵢ*;
and the step of performing a partial unmasking of said intermediate result may comprises applying to said intermediate result XOR operations with both L(*m*_{1,*i* modulo 4}|*m*_{1,*i*+1 modulo 4}|*m*_{1,*i*+2 modulo 4}|*m*_{1,*i*+3 modulo 4}) and L(*M_{sbox}*) with M_{sbox} = { *m_{sbox}*|*m_{sbox}*|*m_{sbox}*|*m_{sbox}* }.

Such a mask switching enables to better protect the execution after the computation of the output of tau function by enabling it to be masked by a 32-bit mask without any correlation between the bytes of the mask.

According to a second aspect, this invention therefore relates to a method for securing against side channel attacks an electronic device executing a SM4 decryption algorithm decrypting a 128-bit ciphertext input $\left({X}_{35}\left|{X}_{34}\left|{X}_{33}\left|{X}_{32}\right.\right.\right.\right) ∈ {\left({Z}_{2}^{32}\right)}^{4}$ to obtain a 128-bit plaintext output (Y₀| Y₁| Y₂| Y₃) $∈ {\left({Z}_{2}^{32}\right)}^{4}$ using, in 32 decryption rounds, round keys ${RK}_{i} ∈ {Z}_{2}^{32}$, i= {0, ..., 31} and a substitution box function Sbox,
said electronic device comprising a processing system and a computer readable memory circuit storing masked SM4 round keys RK'i,
wherein the first round key RK₀ is masked with a first mask M₀ composed of four first mask bytes *m*_{0,0};*m*_{0,1}; *m*_{0,2}; *m*_{0,3} such that *M*₀ = {*m*_{0, 3}|*m*_{0,0}|*m*_{0,1}|*m*_{0,2}},
and wherein each of the other round keys RKᵢ is masked with a mask equal to a result of applying a first circular permutation to the four mask bytes of the mask used to mask the previous round key RKᵢ₋₁, shifting it by 8 bits to the left, said processing system of the electronic device performing the following steps:
   - acquiring said ciphertext input (X₃₅| X₃₄| X₃₃| X₃₂);
   - applying to said acquired ciphertext input : (*X*₃₅ = {*x*_{35,0}|*x*_{35,1}|*x*_{35,2}|*x*_{35,3}}, *X*₃₄ = {*x*_{34,0}|*x*_{34,1}|*x*_{34,2}|*x*_{34,3}}, *X*₃₃ = {*x*_{33,0}|*x*_{33,1}|*x*_{33,2}|*x*_{33,3}}, *X*₃₂ = {*x*_{32,0}|*x*_{32,1}|*x*_{32,2}|*x*_{32,3}}) a masking using said four first mask bytes to obtain a masked ciphertext input (X'₃₅, *X'*₃₄, *X'*₃₃, X'₃₂) such that $X {′}_{35} = \left\{\left.{x}_{35 , 0}⊕{m}_{0 , 2}\right|{x}_{35 , 1}⊕{m}_{0 , 3}\left|{x}_{35 , 2}⊕{m}_{0 , 0}\right|{x}_{35 , 3}⊕{m}_{0 , 1}\right\}$ $X {′}_{34} = \left\{\left.{x}_{34 , 0}⊕{m}_{0 , 1}\right|{x}_{34 , 1}⊕{m}_{0 , 2}\left|{x}_{34 , 2}⊕{m}_{0 , 3}\right|{x}_{34 , 3}⊕{m}_{0 , 0}\right\}$ $X {′}_{33} = \left\{\left.{x}_{33 , 0}⊕{m}_{0 , 0}\right|{x}_{33 , 1}⊕{m}_{0 , 1}\left|{x}_{33 , 2}⊕{m}_{0 , 2}\right|{x}_{33 , 3}⊕{m}_{0 , 3}\right\}$ $X {′}_{32} = \left\{\left.{x}_{32 , 0}⊕{m}_{0 , 3}\right|{x}_{32 , 1}⊕{m}_{0 , 0}\left|{x}_{32 , 2}⊕{m}_{0 , 1}\right|{x}_{32 , 3}⊕{m}_{0 , 2}\right\} ;$
   - performing 32 rounds of calculation using as input said masked ciphertext input, by executing at each round i, i= {0, ...,31}:
      o computing an intermediate result $X {′}_{35 - i} ⊕ T \left(X{′}_{35 - \left(i+1\right)}⊕X{′}_{35 - \left(i+2\right)}⊕X{′}_{35 - \left(i+3\right)}⊕RK{′}_{31 - i}\right) ,$

      where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),
      where SboxM is said substitution function Sbox masked using said four first mask bytes *m*_{0,0};*m*_{0,1};*m*₀,₂;*m*_{0,3} of the first mask Mo, a second mask M₁ composed of four second mask bytes *m*_{1,0};*m*_{1,1};*m*_{1,2}; *m*_{1,3} such that M₁ = {*m*_{1,0}|*m*_{1,1}|*m*_{1,2}|*m*_{1,3}},and a third mask M₂ such that for any 8-bit input x:$SboxM \left[x⊕{M}_{0 xor}\right] = Sbox \left[x\right] ⊕ {M}_{1 xor} ⊕ {m}_{sbox}$
      with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕*m*_{1,3}, *m_{sbox}* = *M*₂[(x⊕*M*_{0*xor*})&3], & being the BITWISE AND logical operator,
      and where the linear transformation L transforms any 32-bit input B into a 32-bit output *L*(*B*) *= B* ⊕ (*B <<<* 2) ⊕ (*B <<<* 10) ⊕ (*B* <<< 18) ⊕ (*B* <<< 24) with B <<< k a 32-bit bitwise cyclic shift of B with k bits shifted left;
         o performing a partial unmasking of said intermediate result to obtain *X*'_{35-(*i*+4)} the output of round i of SM4 decryption algorithm when applied to said ciphertext input, masked by a mask composed of said four first mask bytes, such that:
            *X'*₃₁ *is masked with* {*m*_{0,3}|*m*_{0,0}|*m*_{0,1}|*m*_{0,2}}
            *X'*₃₀ *is masked with* {*m*_{0,0}|*m*_{0,1}|*m*_{0,2}|*m*_{0,3}}
            *X'*₃ *is masked with* {*m*_{0,3}|*m*_{0,0}|*m*_{0,1}|*m*_{0,2}}
            *X'*₂ *is masked with* {*m*_{0,0}|*m*_{0,1}|*m*_{0*,*2}|*m*_{0,3}}
            *X'*₁ *is masked with* {*m*_{0,1}|*m*_{0,2}|*m*_{0,3}|*m*_{0,0}}
            *X'*₀ *is masked with* {*m*_{0,2}|*m*_{0,3}|*m*_{0,0}|*m*_{0,1}};
   - generating said plaintext output *Y*₀, *Y*₁, *Y*₂, *Y*₃ by applying to the outputs of the four last rounds *X*'₃, *X'*₂, *X'*₁, *X'*₀ a reverse transformation R and an unmasking of *X'*₃ using a mask {*m*_{0,3}|*m*_{0,0}|*m*_{0,1}|*m*_{0,2}}, an unmasking of *X'*₂ using a mask {*m*_{0,0}|*m*_{0,1}|*m*_{0,2}|*m*_{0,3}}, an unmasking of *X'*₁ using a mask {*m*_{0,1}|*m*_{0,2}|*m*_{0,3}|*m*_{0,0}} and an unmasking of *X'*₀ using a mask {*m*_{0,2}|*m*_{0,3}|*m*_{0,0}|*m*_{0,1}}.
wherein the reverse transformation R transforms any 128-bit input composed of four 32-bits words (A₀| A₁| A₂| A₃) into a 128-bit output (A₃| A₂| A₁| A₀).

According to an embodiment of the methods according to the first aspect or to the second aspect, said masked round keys $RK ′ i ∈ {Z}_{2}^{32}$ may be derived from masked encryption keys $K ′ i ∈ {Z}_{2}^{32}$ and from masked constant keys $CK ′ i ∈ {Z}_{2}^{32}$, by performing 32 rounds of calculation.

In this embodiment :
the masked first encryption key K'₀ are generated by masking a first encryption key Ko with said first mask *M*₀ = {*m*_{0, 3}|*m*_{0,0}|*m*_{0,1}|*m*_{0,2}},
the masked encryption keys K'₁, K'₂, K'₃ are generated by masking a first encryption key K₁= {K_{1,0} | K_{1,1} | K_{1,2} | K_{1,3} }, a second encryption key K₂= {K_{2,0} | K_{2,1} | K_{2,2} | K_{2,3}} and a third encryption key K₃= {K_{3,0} | K_{3,1} | K_{3,2} | K_{3,3} } using said four first mask bytes such that : $K {′}_{1} = \left\{\left.{K}_{1 , 0}⊕{m}_{0 , 0}\right|{K}_{1 , 1}⊕{m}_{0 , 1}\left|{K}_{1 , 2}⊕{m}_{0 , 2}\right|{K}_{1 , 3}⊕{m}_{0 , 3}\right\}$ $K {′}_{2} = \left\{\left.{K}_{2 , 0}⊕{m}_{0 , 1}\right|{K}_{2 , 1}⊕{m}_{0 , 2}\left|{K}_{2 , 2}⊕{m}_{0 , 3}\right|{K}_{2 , 3}⊕{m}_{0 , 0}\right\}$ $K {′}_{3} = \left\{{K}_{3 , 0}⊕{m}_{0 , 2}\left|{K}_{3 , 1}⊕{m}_{0 , 3}\right.\left|{K}_{3 , 2}⊕{m}_{0 , 0}\right.\left|{K}_{3 , 3}⊕{m}_{0 , 1}\right.\right\} ,$
the masked first constant key CK'₀ is generated (KE5) by masking a first constant key CK₀ with said first mask *M*₀ = {*m*_{0, 3}|*m*_{0,0}|*m*_{0,1}|*m*_{0,2}},
each of the other masked constant keys CK'ᵢ is generated (KE5) by masking a constant key CKᵢ = {CK_{i,0} | CK_{i,1} | CK_{i,2}| CK_{i,3}} with a mask equal to a result of applying a first circular permutation to the four bytes of the mask applied to the previous constant key CKᵢ₋₁ such that: $CK {′}_{1} = \left\{{CK}_{1 , 0}⊕{m}_{0 , 0}\left|{CK}_{1 , 1}⊕{m}_{0 , 1}\right.\left|{CK}_{1 , 2}⊕{m}_{0 , 2}\right.\left|{CK}_{1 , 3}⊕{m}_{0 , 3}\right.\right\}$ $CK {′}_{2} = \left\{{CK}_{2 , 0}⊕{m}_{0 , 1}\left|{CK}_{2 , 1}⊕{m}_{0 , 2}\right.\left|{CK}_{2 , 2}⊕{m}_{0 , 3}\right.\left|{CK}_{2 , 3}⊕{m}_{0 , 0}\right.\right\}$ $CK {′}_{3} = \left\{{CK}_{3 , 0}⊕{m}_{0 , 2}\left|{CK}_{3 , 1}⊕{m}_{0 , 3}\right.\left|{CK}_{3 , 2}⊕{m}_{0 , 0}\right.\left|{CK}_{3 , 3}⊕{m}_{0 , 1}\right.\right\}$ $CK {′}_{31} = \left\{{CK}_{31 , 0}⊕{m}_{0 , 2}\left|{CK}_{31 , 1}⊕{m}_{0 , 3}\right.\left|{CK}_{31 , 2}⊕{m}_{0 , 0}\right.\left|{CK}_{31 , 3}⊕{m}_{0 , 1}\right.\right\} ,$ and: at each round i, i= {0, ...,31} the processing system of the electronic device:
   o computes a key expansion intermediate result:
      *K'ᵢ*⊕*T'*(*K'*_{*i+*1}⊕*K'*_{*i+*2}⊕*K'*_{*i+*3}⊕*CK'ᵢ*),
      where T' is a reversible permutation that outputs 32 bits from a 32-bit input by composing said nonlinear transformation tau and a linear transformation L' transforming any 32-bit input B into a 32-bit output *L'*(*B*) *= B* ⊕ (*B <<<* 13) ⊕ (*B* <<< 23);
   o performs a partial unmasking of said key expansion intermediate result to obtain said masked round key RK'ᵢ=*K*'_{*i*+4} equal to the output of round i of SM4 key expansion algorithm when applied to said encryption keys masked by a mask composed of said four first mask bytes, such that
      *RK*₀ *is masked with* {*m*_{0,3} |*m*_{0,0}|*m*_{0,1}|*m*_{0*,*2}}
      *RK*₁ *is masked with* {*m*_{0,0}|*m*_{0,1}|*m*_{0,2}|*m*_{0,3}}
      *RK*₂ *is masked with* {*m*_{0,1}|*m*_{0,2}|*m*_{0,3}|*m*_{0,0}}
      *RK*₃ *is masked with* {*m*_{0,2}|*m*_{0,3}|*m*_{0*,*0}|*m*_{0,1}} ...
      *RK*₃₁ *is masked with* {*m*_{0,2}|*m*_{0,3}|*m*_{0,0}|*m*_{0,1}}.
The step of computing a key expansion intermediate result may comprise:
- computing a partial key expansion intermediate result by applying said nonlinear transformation tau to *K'*_{*i+*1}⊕*K'*_{*i+*2}⊕*K'*_{*i+*3}⊕*CK'ᵢ*;
- computing a transformed partial key expansion intermediate result by applying to each byte of the partial key expansion intermediate result a mask switch replacing in said byte the mask *M*_{1*xor*} by *m*_{1,(1+*b*) *modulo* 4} where b is a byte index of said byte, b= {0, ...,3};
- applying said linear transformation L' to said transformed partial key expansion intermediate result and xoring the output of said linear transformation L' with said masked key *K'ᵢ* ;
and the step of performing a partial unmasking of said key expansion intermediate result may comprise : applying to said key expansion intermediate result XOR operations with both L'(*m*_{1,*i* modulo 4}|*m*_{1,*i*+1 modulo 4}|*m*_{1,*i*+2 modulo 4}|*m*_{1*,i*+3 modulo 4}) and L'(*M_{sbox}*) with M_{sbox} = { *m_{sbox}*|*m_{sbox}*|*m_{sbox}*|*m_{sbox}* }.

According to a third aspect, this invention therefore relates also to a computer program product directly loadable into the memory of at least one computer, comprising software code instructions for performing the steps of the methods according to the first aspect or to the second aspect when said product is run on the computer.

According to a fourth aspect, this invention therefore relates also to an encryption electronic device comprising :
- a processing system;
- a computer readable memory circuit configured for storing masked SM4 round keys $RK {′}_{i} ∈ {Z}_{2}^{32}$, i= {0, ...,31},

wherein the processing system performs the following steps to secure against side channel attacks the electronic device executing a SM4 encryption algorithm encrypting a 128-bit plaintext input $\left({X}_{0}\left|{X}_{1}\right.\left|{X}_{2}\right.\left|{X}_{3}\right.\right) ∈ {\left({Z}_{2}^{32}\right)}^{4}$ to obtain a 128-bit ciphertext output $\left({Y}_{0}\left|{Y}_{1}\right.\left|{Y}_{2}\right.\left|{Y}_{3}\right.\right) ∈ {\left({Z}_{2}^{32}\right)}^{4}$ using, in 32 encryption rounds, round keys ${RK}_{i} ∈ {Z}_{2}^{32}$, i= {0, ...,31} and a substitution box function Sbox, wherein the first round key RK₀ is masked with a first mask M₀ composed of four first mask bytes *m*_{0,0};*m*_{0,1};*m*_{0,2}; *m*_{0,3} such that *M*₀ = {*m*_{0, 3} |*m*_{0,0}|*m*_{0,1}|*m*_{0*,*2}},
and wherein each of the other round keys RKᵢ is masked with a mask equal to a result of applying a first circular permutation to the four mask bytes of the mask used to the previous round key RKᵢ₋₁ shifting it by 8 bits to the left:
   - acquiring said plaintext input (X₀| X₁| X₂| X₃);
   - applying to said acquired plaintext input : (X₀ = {*x*_{0,0}|*x*_{0,1}|*x*_{0,2}|*x*_{0,3}}, *X*₁ = {*x*_{1,0}|*x*_{1,1}|*x*_{1,2}|*x*_{1,3}}, *X*₂ = {*x*_{2,0}|*x*_{2,1}|*x*_{2,2}|*x*_{2,3}}, *X*₃ = {*x*_{3,0}|*x*_{3,1}|*x*_{3,2}|*x*_{3,3}}) a masking using said four first mask bytes to obtain a masked plaintext input (X'₀, X'₁, X'₂, X'₃) such that: $X {′}_{0} = \left\{{x}_{0 , 0}⊕{m}_{0 , 3}\left|{x}_{0 , 1}⊕{m}_{0 , 0}\right.\left|{x}_{0 , 2}⊕{m}_{0 , 1}\right.\left|{x}_{0 , 3}⊕{m}_{0 , 2}\right.\right\}$ $X {′}_{1} = \left\{{x}_{1 , 0}⊕{m}_{0 , 0}\left|{x}_{1 , 1}⊕{m}_{0 , 1}\right.\left|{x}_{1 , 2}⊕{m}_{0 , 2}\right.\left|{x}_{1 , 3}⊕{m}_{0 , 3}\right.\right\}$ $X {′}_{2} = \left\{{x}_{2 , 0}⊕{m}_{0 , 1}\left|{x}_{2 , 1}⊕{m}_{0 , 2}\right.\left|{x}_{2 , 2}⊕{m}_{0 , 3}\right.\left|{x}_{2 , 3}⊕{m}_{0 , 0}\right.\right\}$ $X {′}_{3} = \left\{{x}_{3 , 0}⊕{m}_{0 , 2}\left|{x}_{3 , 1}⊕{m}_{0 , 3}\right.\left|{x}_{3 , 2}⊕{m}_{0 , 0}\right.\left|{x}_{3 , 3}⊕{m}_{0 , 1}\right.\right\} ;$
   - performing 32 rounds of calculation using as input said masked plaintext input, by executing at each round i, i= {0, ...,31}:
      ∘ computing an intermediate result *X'ᵢ*⊕*T*(*X'*_{*i+*1}⊕*X'*_{*i+*2}⊕*X'*_{*i+*3}⊕*RK'ᵢ*),

      where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),
      where SboxM is said substitution function Sbox masked using said four first mask bytes *m*_{0,0};*m*_{0,1};*m*_{0,2};*m*_{0,3} of the first mask Mo, a second mask M₁ composed of four second mask bytes *m*_{1,0};*m*_{1,1};*m*_{1,2}; *m*_{1, 3} such that M₁ = {*m*_{1,0}|*m*_{1,1}|*m*_{1,2}|*m*_{1,3}}, and a third mask M₂ such that for any 8-bit input x:
         *SboxM*[*x*⊕*M*_{0*xor*}] = *Sbox*[*x*]⊕*M*_{1*xor*}⊕*m_{sbox}*,
      with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕*m*_{1,3}, *m_{sbox}* = *M*₂[(*x*⊕*M*_{0*xor*})&3], & being the BITWISE AND logical operator,
      and where the linear transformation L transforms any 32-bit input B into a 32-bit output *L(B) = B* ⊕ *(B <<<* 2) ⊕ (*B <<<* 10) ⊕ (*B <<<* 18) ⊕ (*B* <<< 24) with B <<< k a 32-bit bitwise cyclic shift of B with k bits shifted left;
         o performing a partial unmasking of said intermediate result to obtain *X'*_{*i*+4} the output of round i of SM4 encryption algorithm when applied to said plaintext input, masked by a mask composed of said four first mask bytes, such that :
            *X'*₄ *is masked with* {*m*_{0,3}|*m*_{0,0}|*m*_{0,1}|*m*_{0,2}}
            *X'*₅ *is masked with* {*m*_{0,0}|*m*_{0,1}|*m*_{0,2}|*m*_{0,3}}
            *X'*₆ *is masked with* {*m*_{0,1}|*m*_{0,2}|*m*_{0,3}|*m*_{0,0}}
            *X'*₃₂ *is masked with* {*m*_{0,3}|*m*_{0,0}|*m*_{0,1}|*m*_{0,2}}
            *X'*₃₃ *is masked with* {*m*_{0,0}|*m*_{0,1}|*m*_{0,2}|*m*_{0,3}}
            *X'*₃₄ *is masked with* {*m*_{0,1}|*m*_{0,2}|*m*_{0,3}|*m*_{0,0}}
            *X'*₃₅ *is masked with* {*m*_{0,2}|*m*_{0,3}|*m*_{0,0}|*m*_{0,1}};
   - generating said ciphertext output *Y*₀, *Y*₁, *Y*₂, *Y*₃ by applying to the outputs of the four last rounds *X*'₃₂, *X'*₃₃, *X'*₃₄, *X'*₃₅ a reverse transformation R and an unmasking of *X'*₃₂ using a mask {*m*_{0,3}|*m*_{0,0}|*m*_{0,1}|*m*_{0,2}}, an unmasking of *X'*₃₃ using a mask {*m*_{0,0}|*m*_{0,1}|*m*_{0,2}|*m*_{0,3}}, an unmasking of *X'*₃₄ using a mask {*m*_{0,1}|*m*_{0,2}|*m*_{0,3}|*m*_{0,0}} and an unmasking of *X'*₃₅ using a mask {*m*_{0,2}|*m*_{0,3}|*m*_{0,0}|*m*_{0,1}},
wherein the reverse transformation R transforms any 128-bit input composed of four 32-bits words (A₀| A₁| A₂| A₃) into a 128-bit output (A₃| A₂| A₁| A₀).

According to a fifth aspect, this invention therefore relates also to a decryption electronic device comprising:
- a processing system;
- a computer readable memory circuit configured for storing masked SM4 round keys $RK {′}_{i} ∈ {Z}_{2}^{32}$, i= {0, ...,31},

wherein the processing system performs the following steps to secure against side channel attacks the electronic device executing a SM4 decryption algorithm decrypting a 128-bit ciphertext input $\left({X}_{35}\left|{X}_{34}\right.\left|{X}_{33}\right.\left|{X}_{32}\right.\right) ∈ {\left({Z}_{2}^{32}\right)}^{4}$ to obtain a 128-bit plaintext output $\left({Y}_{0}\left|{Y}_{1}\right.\left|{Y}_{2}\right.\left|{Y}_{3}\right.\right) ∈ {\left({Z}_{2}^{32}\right)}^{4}$ using, in 32 decryption rounds, round keys ${RK}_{i} ∈ {Z}_{2}^{32}$, i= {0, ...,31} and a substitution box function Sbox,
wherein the first round key RK₀ is masked with a first mask M₀ composed of four first mask bytes *m*_{0,0};*m*_{0,1};*m*_{0,2};*m*_{0,3} such that *M*₀ = {*m*_{0, 3}|*m*_{0,0} |*m*_{0,1}|*m*_{0,2}},
and wherein each of the other round keys RKᵢ is masked with a mask equal to a result of applying a first circular permutation to the four mask bytes of the mask used to the previous round key RKᵢ₋₁, shifting it by 8 bits to the left:
   - acquiring said ciphertext input (X₃₅| X₃₄| X₃₃| X₃₂);
   - applying to said acquired ciphertext input : (*X*₃₅ = {*x*₃₅,₀|*x*_{35,1}|*x*_{35,2}|*x*_{35,3}}, *X*₃₄ = {*x*_{34,0}|*x*_{34,1}|*x*_{34,2}|*x*_{34,3}}, *X*₃₃ = {*x*_{33,0}|*x*_{33,1}|*x*_{33,2}|*x*_{33,3}}, *X*₃₂ = {*x*_{32,0}|*x*_{32,1}|*x*_{32,2}|*x*_{32,3}}) a masking using said four first mask bytes to obtain a masked ciphertext input (X'₃₅, X*'*₃₄, X*'*₃₃, X'₃₂) such that: $X {′}_{35} = \left\{{x}_{35 , 0}⊕{m}_{0 , 2}\left|{x}_{35 , 1}⊕{m}_{0 , 3}\right.\left|{x}_{35 , 2}⊕{m}_{0 , 0}\right.\left|{x}_{35 , 3}⊕{m}_{0 , 1}\right.\right\}$ $X {′}_{34} = \left\{{x}_{34 , 0}⊕{m}_{0 , 1}\left|{x}_{34 , 1}⊕{m}_{0 , 2}\right.\left|{x}_{34 , 2}⊕{m}_{0 , 3}\right.\left|{x}_{34 , 3}⊕{m}_{0 , 0}\right.\right\}$ $X {′}_{33} = \left\{{x}_{33 , 0}⊕{m}_{0 , 0}\left|{x}_{33 , 1}⊕{m}_{0 , 1}\right.\left|{x}_{33 , 2}⊕{m}_{0 , 2}\right.\left|{x}_{33 , 3}⊕{m}_{0 , 3}\right.\right\}$ $X {′}_{32} = \left\{{x}_{32 , 0}⊕{m}_{0 , 3}\left|{x}_{32 , 1}⊕{m}_{0 , 0}\right.\left|{x}_{32 , 2}⊕{m}_{0 , 1}\right.\left|{x}_{32 , 3}⊕{m}_{0 , 2}\right.\right\} ;$
   - performing 32 rounds of calculation using as input said masked ciphertext input, by executing at each round i, i= {0, ...,31}:
      o computing an intermediate result $X {′}_{35 - i} ⊕ T \left(X{′}_{35 - \left(i+1\right)}⊕X{′}_{35 - \left(i+2\right)}⊕X{′}_{35 - \left(i+3\right)}⊕RK{′}_{31 - i}\right) ,$

      where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),
      where SboxM is said substitution function Sbox masked using said four first mask bytes *m*_{0,0};*m*_{0,1};*m*_{0,2};*m*_{0,3} of the first mask Mo, a second mask M₁ composed of four second mask bytes *m*_{1,0};*m*_{1,1};*m*_{1,2};*m*_{1,3} such that M₁ = {*m*_{1,0}|*m*_{1,1}|*m*_{1,2}|*m*_{1,3}}, and a third mask M₂ such that for any 8-bit input x: $SboxM \left[x⊕{M}_{0 xor}\right] = Sbox \left[x\right] ⊕ {M}_{1 xor} ⊕ {m}_{sbox}$
      with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕_{1,3}, *m_{sbox}* = *M*₂[(*x*⊕*M*_{0*xor*})&3], & being the BITWISE AND logical operator,
      and where the linear transformation L transforms any 32-bit input B into a 32-bit output *L*(*B*) *= B* ⊕ (*B <<<* 2) ⊕ (*B <<<* 10) ⊕ (*B* <<< 18) ⊕ (*B* <<< 24) with B <<< k a 32-bit bitwise cyclic shift of B with k bits shifted left;

      o performing a partial unmasking of said intermediate result to obtain *X*'_{35-(*i*+4)} the output of round i of SM4 decryption algorithm when applied to said ciphertext input, masked by a mask composed of said four first mask bytes, such that:
         *X'*₃₁ *is masked with* {*m*_{0,3}|*m*_{0,0}|*m*_{0,1}|*m*_{0,2}}
         *X'*₃₀ *is masked with* {*m*_{0,0}|*m*_{0,1}|*m*_{0,2}|*m*_{0,3}}
         *X'*₃ *is masked with* {*m*_{0,3}|*m*_{0,0}|*m*_{0,1}|*m*_{0,2}}
         *X'*₂ *is masked with* {*m*_{0,0}|*m*_{0,1}|*m*_{0,2}|*m*_{0,3}}
         *X'*₁ *is masked with* {*m*_{0,1}|*m*_{0,2}|*m*_{0,3}|*m*_{0,0}}
         *X'*₀ *is masked with* {*m*_{0,2}|*m*_{0,3}|*m*_{0,0}|*m*_{0,1}};
   - generating said plaintext output *Y*₀, *Y*₁, *Y*₂, *Y*₃ by applying to the outputs of the four last rounds *X*'₃, *X'*₂, *X'*₁, *X'*₀ a reverse transformation R and an unmasking of *X'*₃ using a mask {*m*_{0,3}|*m*_{0,0}|*m*_{0,1}|*m*_{0,2}}, an unmasking of *X'*₂ using a mask {*m*_{0,0}|*m*_{0,1}|*m*_{0,2}|*m*_{0,3}}, an unmasking of *X'*₁ using a mask {*m*_{0,1}|*m*_{0,2}|*m*_{0,3}|*m*_{0,0}} and an unmasking of *X'*₀ using a mask {*m*_{0,2}|*m*_{0,3}|*m*_{0,0}|*m*_{0,1}},
wherein the reverse transformation R transforms any 128-bit input composed of four 32-bits words (A₀| A₁| A₂| A₃) into a 128-bit output (A₃| A₂| A₁| A₀).

According to a sixth aspect, this invention therefore relates also to a system comprising the encryption electronic device according to the fourth aspect and the decryption electronic device according to the fifth aspect.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a system according to an embodiment of the present invention;
- Figure 2 is a schematic illustration of a high-order side-channel attack;
- Figure 3 is a schematic illustration of an electronic device according to an embodiment of the present invention;
- Figure 4 is a schematic illustration of the substitution box function of the state of the art SM4 algorithm;
- Figure 5 illustrates schematically a method for generating the masked round keys according to an embodiment of the present invention;
- Figure 6 illustrates schematically a method for securing against side channel attacks said electronic device executing a SM4 encryption algorithm;
- Figure 7 illustrates schematically a method for securing against side channel attacks said electronic device executing a SM4 decryption algorithm.

### DETAILED DESCRIPTION

The invention aims at providing a system, and an associated method, protecting against side channel attacks the execution of SM4 cryptographic algorithm by an electronic device 300 comprising a processing system 301. Such an electronic device may for example be a smartcard reader housing a smartcard device, or an electronic device, such as a smartphone, including a smartchip. The electronic device may be operated by a user sending commands for cryptographic operations such as data encryption or decryption according to SM4 algorithm.

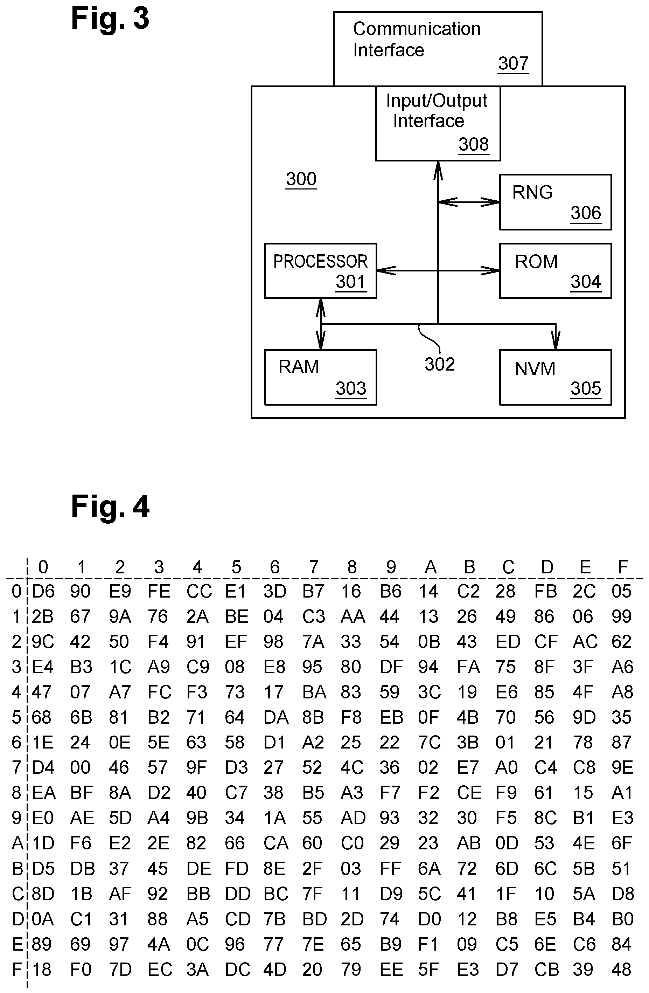

**Figure 3** is a schematic illustration of the electronic device 300. The electronic device 300 may include a processing system 301 having at least one hardware processor, connected via a bus 302 to a computer readable memory circuit including a random access memory (RAM) 303, a read-only memory (ROM) 304, and/or a non-volatile memory (NVM) 305. The electronic device 300 may also include a random number generator (RNG) 306, included in the hardware processor or connected to it via the bus. The electronic device 300 may further include a communication interface 307 by which the electronic device 300 may be connected to various forms of wireless networks, e.g., wide-area networks, WiFi networks, or mobile telephony networks. Alternatively, the electronic device 300 may connect to networks via wired network connections such as Ethernet. The computer system may also include input/output means 308 providing interfaces to the user of the computer system, such as one or more screens, loudspeakers, a mouse, tactile surfaces, a keyboard etc...

In the rest of the description, the electronic device may be described as executing either an encryption algorithm or a decryption algorithm, depending on which method is being described. In order to clarify its role, the electronic device may be called encryption electronic device when performing steps of an encryption method, and it may be called decryption electronic device when performing steps of a decryption method.

State-of-the-Art SM4 encryption and decryption algorithms are described in SM4 Block Cipher Algorithm, GM/T 0002, Cryptography Standardization Technical Committee, 2012: http://gmbz.org.cn/main/postDetail.html?id=20250123174734.

They both take as inputs a 128-bit input $\left({X}_{0}\left|{X}_{1}\right.\left|{X}_{2}\right.\left|{X}_{3}\right.\right) ∈ {\left({Z}_{2}^{32}\right)}^{4}$, which is either a plaintext input to be ciphered or a ciphertext to be deciphered and 32 round keys ${RK}_{i} ∈ {Z}_{2}^{32}$, i= {0, ...,31} where | is the concatenate operation.

At each of the 32 rounds, both algorithms perform a computation of a term which can be expressed as *L*(*tau*(*X*_{*i+*1}⊕*X*_{*i+*2}⊕*X*_{*i+*3}⊕*RKᵢ*)), in which
- the exact value of i depends on the exact round and whether the ongoing cryptographic operation is an encryption or a decryption,
- X values are either inputs of the cryptographic operation or outputs of previous rounds,
- L is a linear transformation which transforms any 32-bit input B into a 32-bit output *L*(*B*) *= B* ⊕ (*B <<<* 2) ⊕ (*B <<<* 10) ⊕ (*B* <<< 18) ⊕ (*B* <<< 24) with B <<< k a 32-bit bitwise cyclic shift of B with k bits shifted left and ⊕ the bitwise exclusive-or operator,
- tau is a nonlinear transformation transforming any 32-bit input A= (ao| a₁| a₂| a₃) into a 32-bit output tau(A) = B = (b₀| b₁| b₂| b₃) = (Sbox(a₀)| Sbox(a₁)| Sbox(a₂)| Sbox(a₃)) where Sbox is a substitution box function transforming a 8-bit input into a 8-bit output.

In state-of-the-Art SM4 algorithm, the Sbox to be used is given on **Figure 4****.**

The invention aims at protecting such computations against side-channel attacks by applying 32-bits masks to the inputs of the cryptographic operation and to the round keys.

In order to make such a masking compatible with the 8-bit Sbox used by the tau transformation, the main idea of the invention is to generate all masks for all inputs and round keys from a single mask by applying to it a circular permutation shifting the mask to the right or the left by n*8 bits, with n in {0, ...,31}. The rationale behind this is get masked input values X' and masked round keys RK' such that when computing the value *X'*_{*i+*1}⊕*X'*_{*i+*2}⊕*X'*_{*i+*3}⊕*RK'ᵢ* the result will be a 32-bits word composed of four 8-bit chunks all masked by the same mask. As an example, if
*X'*_{*i+*1} is *X*_{*i*+1} masked by {*m*_{0,0}|*m*_{0,1}|*m*_{0,2}|*m*_{0,3}},
*X'*_{*i+*2} is *X*_{*i*+2} masked by {*m*_{0,1}|*m*_{0,2}|*m*_{0,3}|*m*_{0,0}},
*X'*_{*i+*3} is *X*_{*i*+3} masked by {*m*_{0,2}|*m*_{0,3}|*m*_{0,0}|*m*_{0,1}},
*RK'ᵢ* is *RKᵢ* masked by {*m*_{0,3}|*m*_{0,0}|*m*_{0,1}|*m*_{0,2}},
the value *X'*_{*i+*1}⊕*X'*_{*i+*2}⊕*X'*_{1*+*3}⊕*RK'ᵢ* will be equal to *X*_{*i+*1}⊕*X*_{*i+*2}⊕*X*_{*i+*3}⊕*RKᵢ* masked by {*M*_{0*xor*}|*M*_{0*xor*}|*M*_{0*xor*}|*M*_{0*xor*}} with *M*_{0*xor*} a 8-bit mask such that *M*_{0*xor*} = *m*_{0,0}⊕*m*_{0,1}⊕*m*_{0,2}⊕*m*_{0,3}.

As a result, all inputs to the 8-bit Sbox used in tau function will be masked with the same mask.

Therefore, the second main idea of the invention is to replace the Sbox to be used in SM4 algorithm by a masked Sbox, called SboxM incorporating *M*_{0*xor*} as input mask and another predefined mask as output mask, that can be called *Mₒᵤₜ* for now, such that *SboxM*[*x*⊕*M*_{0*xor*}] *= Sbox*[*x*]⊕*Mₒᵤₜ* for any value of x.

Finally, in order to revert to a true 32-bit mask after SboxM has been applied, instead of just a 4-times repetition of the same 8-bit mask, the third idea of the invention is to apply a mask change to the four Sbox outputs composing the result of *tau*(*X*_{*i+*1}⊕*X*_{*i+*2}⊕*X*_{*i+*3}⊕*RKᵢ*) such that each Sbox output gets masked by a different mask.

### Key Schedule

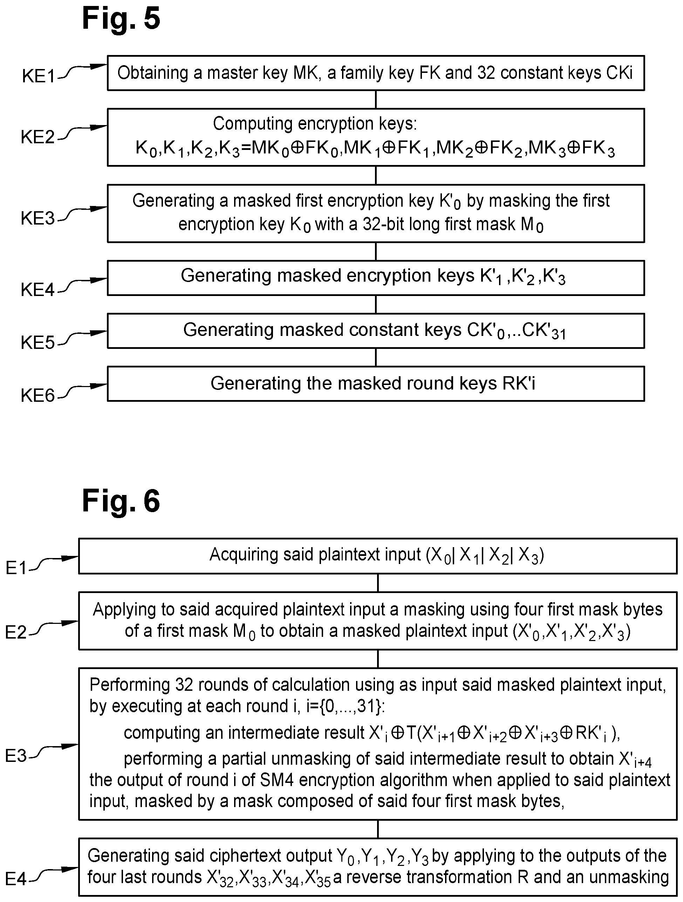

The following paragraphs first describe in detail the steps, depicted in **Figure 5****,** for generating the masked round keys which will be later used in both methods according to the invention for securing the execution by the electronic device 300 of either SM4 encryption algorithm or SM4 decryption algorithm. All these steps may be performed far ahead of the encryption or decryption algorithm execution and their result may be stored in a memory of the electronic device.

The round keys to be used in SM4 algorithm are usually derived from a master key MK of length 128 bits such that *MK = MK*₀ |*MK*₁| *MK*₂| *MK*₃, a family key *FK = FK*₀ |*FK*₁| *FK*₂| *FK*₃ with MKₚ and ${FK}_{p} ∈ {Z}_{2}^{32}$ with p in {0, ..., 3} and 32 constant keys $CKi ∈ {Z}_{2}^{32}$ with i in {0, ..., 31}.

In a first secure Key Expansion step KE1 the electronic device obtains a master key MK, a family key FK and 32 constant keys CKi.

Let CK{i, j} be the j-th byte (i = 0, 1, ..., 31; j = 0, 1, 2, 3) of CKi; CKi = (CK{i, 0} | CK{i, 1}| CK{i, 2}| CK{i, 3}). Therefore, each CK{i, j} is a 8-bit string, and each CKi a 32-bit word. According to state-of-the-art SM4 algorithm, CK{i, j} = (4i + j) x 7 (mod 256), which gives in hexadecimal notation, CK₀ = 00070E15, CK₁ = 1C232A31, CK₂ = 383F464D, CK₃ = 545B6269, CK₄ = 70777E85, CK₅ = 8C939AA1, CK₆ = A8AFB6BD, CK₇ = C4CBD2D9, CK₈ = E0E7EEF5, CK₉ = FC030A11, CK₁₀ = 181 F262D, CK₁₁ = 343B4249, CK₁₂ = 50575E65, CK₁₃ = 6C737A81, CK₁₄ = 888F969D, CK₁₅ = A4ABB2B9, CK₁₆ = C0C7CED5, CK₁₇ = DCE3EAF1, CK₁₃ = F8FF060D, CK₁₉ = 141B2229, CK₂₀ = 30373E45, CK₂₁ = 4C535A61, CK₂₂ = 686F767D, CK₂₃ = 848B9299, CK₂₄ = A0A7AEB5, CK₂₅ = BCC3CAD1, CK₂₆ = D8DFE6ED, CK₂₇ = F4FB0209, CK₂₈ = 10171E25, CK₂₉ = 2C333A41, CK₃₀ = 484F565D, CK₃₁ = 646B7279.

In addition, also according to state-of-the-art SM4 algorithm FK₀ = A3B1BAC6, FK₁ = 56AA3350, FK₂ = 677D9197 and FK₃ = B27022DC.

In a second secure Key Expansion step KE2, still according to state-of-the-art SM4 algorithm, four encryption keys K₀, K₁, K₂, K₃ are derived from the master key MK by computing *K*₀, *K*₁, *K*₂, *K*₃ *= MK*₀ ⊕ *FK*₀, *MK*₁ ⊕ *FK*₁, *MK*₂ ⊕ *FK*₂, *MK*₃ ⊕ *FK*₃.

In a third secure Key Expansion step KE3, a masked first encryption key K'₀ may be generated by masking the first encryption key Ko with a 32-bit long first mask M₀ composed of four first mask bytes *m*_{0,0}; *m*_{0,1}; *m*_{0,2}; *m*_{0, 3} such that *M*₀ = {*m*_{0, 3}|*m*_{0*,*0}|*m*_{0,1}|*m*_{0*,*2}}.

In a fourth secure Key Expansion step KE4, masked encryption keys $K {′}_{1} , K {′}_{2} , K {′}_{3} ∈ {Z}_{2}^{32}$ may be generated by masking the first encryption key K₁= {K₁,₀ | K_{1,1} | K_{1,2} | K_{1,3} }, the second encryption key K₂= {K_{2,0} | K_{2,1} | K_{2,2} | K_{2,3}} and the third encryption key K₃= {K_{3,0} | K_{3,1} | K_{3,2} | K_{3,3} } with a mask equal to a result of applying a first circular permutation to the four bytes of the mask applied to the previous encryption key, shifting it by 8 bits in a predetermined direction, left or right. The shifting must be applied for all encryption keys in the same predetermined direction.

The rest of the description, and the claims, describe the case where the predetermined direction is left but the invention also covers the equivalent case where the predetermined direction is left.

When the first circular permutation shifts to the left, K'₁, K'₂, K'₃ are such that: $K {′}_{1} = \left\{{K}_{1 , 0}⊕{m}_{0 , 0},{K}_{1 , 1}⊕{m}_{0 , 1},{K}_{1 , 2}⊕{m}_{0 , 2},{K}_{1 , 3}⊕{m}_{0 , 3}\right\}$ $K {′}_{2} = \left\{{K}_{2 , 0}⊕{m}_{0 , 1},{K}_{2 , 1}⊕{m}_{0 , 2},{K}_{2 , 2}⊕{m}_{0 , 3},{K}_{2 , 3}⊕{m}_{0 , 0}\right\}$ $K {′}_{3} = \left\{{K}_{3 , 0}⊕{m}_{0 , 2},{K}_{3 , 1}⊕{m}_{0 , 3},{K}_{3 , 2}⊕{m}_{0 , 0},{K}_{3 , 3}⊕{m}_{0 , 1}\right\} .$

In a fifth secure Key Expansion step KE5, a masked first constant key CK'o may be generated by masking the first constant key CK₀ with the first mask *M*₀ = {*m*_{0, 3}|*m*_{0,0}|*m*_{0,1}|*m*_{0,2}}, and each of the other masked constant keys CK'ᵢ is generated by masking a constant key CKᵢ = {CK_{i,0} | CK_{i,1} | CK_{i,2} | CK_{i,3}} with a mask equal to a result of applying the first circular permutation to the four bytes of the mask applied to the previous constant key CKᵢ₋₁ , shifting them in the same predetermined direction than the one used for generating the masked keys K'₁, K'₂, K'₃ . When the first circular permutation shifts to the left, the constant keys are such that: $\begin{matrix}CK {′}_{1} = \left\{{CK}_{1 , 0}⊕{m}_{0 , 0}\left|{CK}_{1 , 1}⊕{m}_{0 , 1}\right|\left.{CK}_{1 , 2}⊕{m}_{0 , 2}\right|{CK}_{1 , 3}⊕{m}_{03}\right\} \\ CK {′}_{2} = \left\{{CK}_{2 , 0}⊕{m}_{0 , 1}\left|{CK}_{2 , 1}⊕{m}_{0 , 2}\right|\left.{CK}_{2 , 2}⊕{m}_{0 , 3}\right|{CK}_{2 , 3}⊕{m}_{0 , 0}\right\} \\ CK {′}_{3} = \left\{{CK}_{3 , 0}⊕{m}_{0 , 2}\left|{CK}_{3 , 1}⊕{m}_{0 , 3}\right|\left.{CK}_{3 , 2}⊕{m}_{0 , 0}\right|{CK}_{3 , 3}⊕{m}_{0 , 1}\right\} \\ … \\ CK {′}_{31} = \left\{{CK}_{31 , 0}⊕{m}_{0 , 2}\left|{CK}_{31 , 1}⊕{m}_{0 , 3}\right|\left.{CK}_{31 , 2}⊕{m}_{0 , 0}\right|{CK}_{31 , 3}⊕{m}_{0 , 1}\right\} ,\end{matrix}$

In a sixth secure Key Expansion step KE6, the masked round keys RK'i $∈ {Z}_{2}^{32}$ are derived by performing 32 rounds of calculation such that at each round i, i= {0, ...,31}, the processing system of the electronic device first computes a key expansion intermediate result *K'ᵢ*⊕*T'*(*K'*_{*i+*1}⊕*K'*_{*i+*2}⊕*K'*_{*i+*3}⊕*CK'ᵢ*), where T' is a reversible permutation that outputs 32 bits from a 32-bit input by composing a nonlinear transformation tau and a linear transformation L'.

The nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)), where SboxM is the substitution function Sbox of state-of-the-art SM4 algorithm shown on Figure 4, masked such that for any 8-bit input x: $SboxM \left[x⊕{M}_{0 xor}\right] = Sbox \left[x\right] ⊕ {M}_{1 xor} ⊕ {m}_{sbox}$ where *M*_{0*xor*} = *m*_{0,0}⊕*m*_{0,1}⊕*m*_{0,2}⊕*m*_{0,3}, *m*_{0,0};*m*_{0,1};*m*_{0,2}; *m*_{0, 3} being the four first mask bytes of the first mask Mo,
*M*_{1*xor*} = *m*_{1,0}⊕*m*_{1,1}⊕*m*_{1,2}⊕*m*_{1,3}, *m*_{1,0};*m*_{1,1};*m*_{1,2}; *m*_{1, 3} being four second mask bytes of a second mask M₁ such that M₁ = {*m*_{1,0}|*m*_{1,1}|*m*_{1,2}|*m*_{1,3}}, and *m_{sbox}* = *M*₂[(*x*⊕*M*_{0*xor*})&3], M₂ being a third mask of length 8-bit and & being the BITWISE AND logical operator.

The linear transformation L' transforms any 32-bit input B into a 32-bit output *L'*(*B*) *= B* ⊕ (*B <<<* 13) ⊕ (*B* <<< 23).

Then, that at each round i, i= {0, ...,31}, the electronic device performs a partial unmasking of the key expansion intermediate result to obtain the masked round key RK'ᵢ=*K'*_{*i*+4} equal to the output of round i of SM4 key expansion algorithm when applied to said encryption keys (this output would be RKᵢ) masked by the first mask M0 at round 0, and for the other rounds masked by a mask equal to a result of applying the first circular permutation to the four bytes of the mask applied to the previous round key RKᵢ₋₁, shifting them in the same predetermined direction than the one used for generating the masked keys K'₁, K'₂, K'₃ . When the first circular permutation shifts to the left, the masked round keys are such that $\begin{matrix}RK {′}_{0} is {RK}_{0} masked with \left\{{m}_{0 , 3}\left|{m}_{0 , 0}\right|\left.{m}_{0 , 1}\right|{m}_{0 , 2}\right\} ; \\ RK {′}_{1} is {RK}_{1} masked with \left\{{m}_{0 , 0}\left|{m}_{0 , 1}\right|\left.{m}_{0 , 2}\right|{m}_{0 , 3}\right\} ; \\ RK {′}_{2} is {RK}_{2} masked with \left\{{m}_{0 , 1}\left|{m}_{0 , 2}\right|\left.{m}_{0 , 3}\right|{m}_{0 , 0}\right\} ; \\ RK {′}_{3} is {RK}_{3} masked width \left\{{m}_{0 , 2}\left|{m}_{0 , 3}\right|\left.{m}_{0 , 0}\right|{m}_{0 , 1}\right\} ; \\ … ; \\ RK {′}_{31} is {RK}_{31} masked with \left\{{m}_{0 , 2}\left|{m}_{0 , 3}\right|\left.{m}_{0 , 0}\right|{m}_{0 , 1}\right\} .\end{matrix}$ When computing *tau*(*K'*_{*i+*1}⊕*K'*_{*i+*2}⊕*K'*_{*i+*3}⊕*CK'ᵢ*)*,* the masks of each byte of each term combine themselves together and, if we use the notation${K}_{i + 1} ⊕ {K}_{i + 2} ⊕ {K}_{i + 3} ⊕ {CK}_{i} = \left({a}_{i , 0}\left|{a}_{i , 1}\right|{a}_{i , 2}|{a}_{i , 3}\right)$ we get=
*K'*_{*i+*1}⊕*K'*_{*i+*2}⊕*K'*_{*i+*3}⊕*CK'ᵢ* = (a_{i,0} ⊕ *M*_{0*xor*} | a_{i,1}⊕ *M*_{0*xor*} | a_{i,2}⊕ *M*_{0*xor*} | a_{i,3}⊕ *M*_{0*xor*}) with *M*_{0*xor*} = *m*_{0,0}⊕*m*_{0,1}⊕*m*_{0,2}⊕*m*_{0,3}.

As an example, at round 0, the electronic device computes *K'*₀⊕*T'*(*K'*₁⊕*K'*₂⊕*K'*₃⊕*CK'*₀)*.*

Assuming that: $K {′}_{1} = \left\{{K}_{1 , 0}⊕{m}_{0 , 0}\left|{K}_{1 , 1}⊕{m}_{0 , 1}\right|\left.{K}_{1 , 2}⊕{m}_{0 , 2}\right|{K}_{1 , 3}⊕{m}_{0 , 3}\right\}$ $K {′}_{2} = \left\{{K}_{2 , 0}⊕{m}_{0 , 1}\left|{K}_{2 , 1}⊕{m}_{0 , 2}\right|\left.{K}_{2 , 2}⊕{m}_{0 , 3}\right|{K}_{2 , 3}⊕{m}_{0 , 0}\right\} ,$ $K {′}_{3} = \left\{{K}_{3 , 0}⊕{m}_{0 , 2}\left|{K}_{3 , 1}⊕{m}_{0 , 3}\right|\left.{K}_{3 , 2}⊕{m}_{0 , 0}\right|{K}_{3 , 3}⊕{m}_{0 , 1}\right\} ,$ $CK {′}_{0} = \left\{{CK}_{0 , 0}⊕{m}_{0 , 3}\left|{CK}_{0 , 1}⊕{m}_{0 , 0}\right|\left.{CK}_{0 , 2}⊕{m}_{0 , 1}\right|{CK}_{0 , 3}⊗{m}_{0 , 2}\right\} ,$ we can see that the bytes of *K'*₀⊕*T'*(*K'*₁⊕*K'*₂⊕*K'*₃⊕*CK'*₀) are equal to:
first byte : *K*_{1,0} ⊕ *K*_{2,0} ⊕ *K*_{3,0} ⊕ *CK*_{0,0} ⊕ *m*_{0,0}⊕ *m*_{0,1} ⊕ *m*_{0,2} ⊕ *m*_{0,3}
second byte *K*_{1,1} ⊕ *K*_{2,1} ⊕ *K*_{3,1} ⊕ *CK*_{0,1} ⊕ *m*_{0,0} ⊕ *m*_{0,1} ⊕ *m*_{0,1} ⊕ *m*_{0,3}
third byte *K*_{1,2} ⊕ *K*_{2,2} ⊕ *K*_{3,2} ⊕ *CK*_{0,2} ⊕ *m*_{0,0} ⊕ *m*_{0,1} ⊕ *m*_{0*,*2} ⊕ *m*_{0,3}
fourth byte *K*_{1,3} ⊕ *K*_{2,3} ⊕ K_{3,3} ⊕ *CK*_{0,3} ⊕ *m*_{0,0} ⊕ ⊕*m*_{0,1} ⊕ *m*_{0,2} ⊕ *m*_{0,3}
Each byte of *K'*₀⊕*T'*(*K'*₁⊕*K'*₂⊕*K'*₃⊕*CK'*₀) is masked by *M*₀*ₓₒᵣ = m*_{,0,0}⊕*m*_{0,1}⊕*m*_{0,2}⊕*m*_{0,3}·

By definition of the function tau, tau(A') = B' = (b'ol b'₁| b'₂| b'₃) = (SboxM(a'₀)| SboxM(a'₁)| SboxM(a'₂)| SboxM(a'₃)), and then *tau*(*K'*_{*i*+1}⊕*K'*_{*i*+2}⊕*K'*_{*i*+3}⊕*CK'ᵢ*) = (SboxM(a_{i,0} ⊕ *M*_{0*xor*})|SboxM(aᵢ₊₁⊕ *M*_{0*xor*})|SboxM(a_{i,2}⊕ *M*_{0*xor*})|SboxM (a_{i,3}⊕ *M*_{0*xor*})) Using the notation Sbox(a_{i,j}) = b_{i,j}, *tau*(*K'*_{*i+*1}⊕*K'*_{*i*+2}⊕*K'*_{*i*+3}⊕*CK'ᵢ*) = (b_{i,0} ⊕ *M*_{1*xor*}⊕*m_{sbox}*)|(b_{i,1}⊕*M*_{1*xor*}⊕*m_{sbox}*)|(b_{i,2}⊕*M*_{1*xor*}⊕*m_{sbox}*)| (b_{i,3}⊕ *M*_{1*xor*}⊕*m_{sbox}*).

In a first embodiment, the reversible permutation T' may be just defined by the relation T'(A') = L'(tau(A')) for any 32-bit input A'= (a'ol a'₁| a'₂| a'₃). and, using the notation (b_{i,0}| b_{i,1}| b_{i,2}| b_{i,3}) = Bi T'(K'i+1⊕K'i+2⊕K'i+3⊕CK'i) = L'(Bi) ⊕ L'(M1xor⊕msbox|M1xor⊕msbox|M1xor⊕msbox|M1xor⊕msbox).

In such a case, at the end of the sixth secure Key Expansion step KE6, the key expansion intermediate result *K'ᵢ*⊕*T'*(*K'*_{*i*+1}⊕*K'*_{*i+*2}⊕*K'*_{*i*+3}⊕*CK'ᵢ*) is equal to *K'ᵢ* ⊕ L'(Bi) ⊕ *L'*(*M*_{1*xor*}⊕*m_{sbox}*|*M*_{1*xor*}⊕*m_{sbox}*|*M*_{1*xor*}⊕*m_{sbox}*|*M*_{1*xor*}⊕*m_{sbox}*) and the masked round key RK'ᵢ=*K'*_{*i*+4} can be obtained by performing a partial unmasking consisting in removing the mask *L'*(*M*_{1*xor*}⊕*M_{sbox}*|*M*_{1*xor*}⊕*m_{sbox}*|*m*_{1*xor*}⊕*M_{sbox}*|*M*_{1*xor*}⊕*M_{sbox}*).

Nevertheless, in the first embodiment described above, it may be considered that the masking of L'(Bi) is insufficient. Indeed *L'*(*M*_{1*xor*}⊕*m_{sbox}*|*M*_{1*xor*}⊕*m_{sbox}*|*M*_{1*xor*}⊕*m_{sbox}*|*M*_{1*xor*}⊕*m_{sbox}*) is not really a 32-bit mask since it is a four times repetition of the same 8-bit mask *M*_{1*xor*}⊕*m_{sbox}.*

Therefore, according to a second embodiment, in the sixth secure Key Expansion step KE6, the key expansion intermediate result may be computed by the electronic device by executing the following sub steps to get an output of the T' function masked with a real 32-bit mask.

In a first substep, the electronic device computes a partial key expansion intermediate result by applying the nonlinear transformation tau to *K'*_{*i*+1}⊕*K'*_{*i*+2}⊕*K'*_{*i*+3}⊕*CK'ᵢ* . As described above in the first embodiment, the output of this substep is : tau(K'i+1⊕K'i+2⊕K'i+3⊕CK'i) = (bi,0 ⊕ M1xor⊕msbox)|(bi,1 ⊕ M1xor⊕msbox)|(bi,2⊕ M1xor⊕msbox)| (bi,3⊕ M1xor⊕msbox).

Then, in a second substep, the electronic device computes a transformed partial key expansion intermediate result by applying to each byte of the partial key expansion intermediate result a mask switch replacing in said byte the mask *M*₁*ₓₒᵣ by m*_{1,(*i+b*) *modulo* 4} where b is the byte index of said byte, b= {0, ...,3}. The output of this substep is : (bi,0 ⊕ m1,i modulo 4⊕msbox) |(bi,1⊕ m1,(i+1) modulo 4⊕msbox) |(bi,2⊕ m1,(i+2) modulo 4⊕msbox) | (bi,3⊕ m1,(i+3) modulo 4⊕msbox).

Finally, in a third substep, the electronic device applies said linear transformation L' to said transformed partial key expansion intermediate result and xors the output of the linear transformation L' with the masked key *K'ᵢ.* By doing so, the computed key expansion intermediate result *K'ᵢ*⊕*T'*(*K'*_{*i+*1}⊕*K'*_{*i+*2}⊕*K'*_{*i*+3}⊕*CK'ᵢ*), is equal to *K'ᵢ*⊕ L'(Bi) ⊕ L'(*m*_{1,*i modulo* 4}|*M*_{1,*i*+1 *modulo*} 4|*m*_{1,*i*+2 *modulo* 4}|*m*_{1,*i*+3 *modulo* 4}) ⊕ L'(*M_{sbox}*), with M_{sbox} = { *m_{sbox}*|*m_{sbox}*|*m_{sbox}*|*m_{sbox}* }.

In this embodiment, the step of performing a partial unmasking of said key expansion intermediate result comprises applying to said key expansion intermediate result XOR operations with both L'(*m*_{1,*i modulo* 4}|*m*_{1,*i*+1 *modulo* 4}|*m*_{1,*i*+2 *modulo* 4}|*m*_{1,*i*+3 *modulo* 4}) and L'(*M_{sbox}*).

### Encryption

The following paragraphs describe in detail according to a first aspect of the invention the steps performed by the processing system 301 of the electronic device 300 ("called encryption electronic device"), depicted in **Figure 6****,** for securing against side channel attacks said electronic device 300, executing a SM4 encryption algorithm encrypting a 128-bit plaintext input (X₀| $\left.{X}_{1}\left|{X}_{2}\right|{X}_{3}\right) ∈ {\left({Z}_{2}^{32}\right)}^{4}$ to obtain a 128-bit ciphertext output (Y₀| Y₁| Y₂| Y₃) ∈ ${\left({Z}_{2}^{32}\right)}^{4}$ using, in 32 encryption rounds, the round keys ${RK}_{i} ϵ {Z}_{2}^{32}$, i= {0, ...,31} and the substitution box function Sbox.

In a first encryption step E1, the encryption electronic device 300 acquires said plaintext input (Xo| X₁| X₂| X₃) such that X₀ = {*x*_{0,0}|*x*_{0,1}|*x*_{0,2}|*x*_{0,3}}, *X*₁ = {*x*_{1,0}|*x*_{1,1}|*x*_{1,2}|*x*_{1,3}}, *X*₂ = {*x*_{2,0}|*x*_{2,1}|*x*_{2,2}|*x*_{2,3}}, *X*₃ = {*x*_{3,0}|*x*_{3,1}|*x*_{3,2}|*x*_{3,3}}).

In a second encryption step E2, the encryption electronic device 300 applies to said acquired plaintext input a masking using said four first mask bytes to obtain a masked plaintext input (X'₀, X'₁, X'₂, X'₃) such that: $X {′}_{0} = \left\{{x}_{0 , 0}⊕{m}_{0 , 3}\left|{x}_{0 , 1}⊕{m}_{0 , 0}\right.\left|{x}_{0 , 2}⊕{m}_{0 , 1}\right.\left|{x}_{0 , 3}⊕{m}_{0 , 2}\right.\right\}$ $X {′}_{1} = \left\{{x}_{1 , 0}⊕{m}_{0 , 0}\left|{x}_{1 , 1}⊕{m}_{0 , 1}\right.\left|{x}_{1 , 2}⊕{m}_{0 , 2}\right.\left|{x}_{1 , 3}⊕{m}_{0 , 3}\right.\right\}$ $X {′}_{2} = \left\{{x}_{2 , 0}⊕{m}_{0 , 1}\left|{x}_{2 , 1}⊕{m}_{0 , 2}\right.\left|{x}_{2 , 2}⊕{m}_{0 , 3}\right.\left|{x}_{2 , 3}⊕{m}_{0 , 0}\right.\right\}$ $X {′}_{3} = \left\{{x}_{3 , 0}⊕{m}_{0 , 2}\left|{x}_{3 , 1}⊕{m}_{0 , 3}\right.\left|{x}_{3 , 2}⊕{m}_{0 , 0}\right.\left|{x}_{3 , 3}⊕{m}_{0 , 1}\right.\right\} .$

In a third encryption step E3, the encryption electronic device 300 performs 32 rounds of calculation using as input said masked plaintext input and said masked SM4 round keys RK'i previously generated as described here above and stored in the computer readable memory circuit of the encryption electronic device, by executing at each round i, i= {0, ...,31} the following substeps.

In a first encryption substep, the electronic device computes an intermediate result *X'ᵢ*⊕*T*(*X'*_{*i*+1}⊕*X'*_{*i*+2}⊕*X'*_{*i*+3}⊕*RK'ᵢ*), where T is a reversible permutation that outputs 32 bits from a 32-bit input by composing a linear transformation L and the nonlinear transformation tau defined above.

The nonlinear transformation tau transforms any 32-bit input A'= (a'ol a'₁| a'₂| a'₃) into a 32-bit output tau(A) = B = (b'ol b'₁| b'₂| b'₃) = (SboxM(a'₀)| SboxM(a'₁)| SboxM(a'₂)| SboxM(a'₃)), where SboxM is the substitution function Sbox of state-of-the-art SM4 algorithm, illustrated on Figure 4, masked using said four first mask bytes *m*_{0,0}; *m*_{0,1}; *m*_{0,2}; *m*_{0, 3} of the first mask Mo, a second mask M₁ composed of four second mask bytes *m*_{1,0};*m*_{1,1};m_{1,2}; *m*_{1, 3} such that M₁ = {*m*_{1,0}|*m*_{1,1}|*m*_{1,2}|*m*_{1,3}}, and a third mask M₂ such that for any 8-bit input x:
*SboxM*[*x*⊕*M*_{0*xor*}] *= Sbox*[*x*]⊕*M*_{1*xor*}⊕*m_{sbox}*, with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕*m*_{1,3}, *m_{sbox}* = *M*₂[(*x*⊕*M*_{0*xor*})&3], and & being the BITWISE AND logical operator.
The linear transformation L transforms any 32-bit input B into a 32-bit output *L*(*B*) *= B* ⊕ (*B <<<* 2) ⊕ (*B <<<* 10) ⊕ (*B <<<* 18) ⊕ (*B* <<< 24).

Then, that at each round i, i= {0, ...,31}, in a second encryption substep, the encryption electronic device performs a partial unmasking of said intermediate result to obtain *X'*_{*i*+4} the output of round i of SM4 encryption algorithm when applied to said plaintext input, masked by a mask composed of said four first mask bytes, such that:
*X'*₄ *is masked with* {*m*_{0,3}|*m*_{0,0}|*m*_{0,1}|*m*_{0,2}}
*X'*₅ *is masked with* {*m*_{0,0}|*m*_{0,1}|*m*_{0,2}|*m*_{0,3}}
*X'*₆ *is masked with* {*m*_{0,1}|*m*_{0,2}|*m*_{0,3}|*m*_{0,0}}
... *X'*₃₂ *is masked with* {*m*_{0,3}|*m*_{0,0}|*m*_{0,1}|*m*_{0,2}}
*X'*₃₃ *is masked with* {*m*_{0,0}|*m*_{0,1}|*m*_{0,2}|*m*_{0,3}}
*X'*₃₄ *is masked with* {*m*_{0,1}|*m*_{0,2}|*m*_{0,3}|*m*_{0,0}}
*X'*₃₅ *is masked with* {*m*_{0,2}|*m*_{0,3}|*m*_{0,0}|*m*_{0,1}}.

In a fourth encryption step E4, the encryption electronic device 300 generates the ciphertext output *Y*₀, *Y*₁, *Y*₂, *Y*₃ by applying to the outputs of the four last rounds *X'*₃₂, *X'*₃₃, *X'*₃₄, *X'*₃₅ a reverse transformation R and an unmasking of *X'₃₂* using a mask {*m*_{0,3}|*m*_{0,0}|*m*_{0,1}|*m*_{0,2}}, an unmasking of *X'*₃₃ using a mask {*m*_{0,0}|*m*_{0,1}|*m*_{0,2}|*m*_{0,3}}, an unmasking of *X'*₃₄ using a mask {*m*_{0,1}|*m*_{0,2}|*m*_{0,3}|*m*_{0,0}} and an unmasking of *X'*₃₅ using a mask {*m*_{0,2}|*m*_{0,3}|*m*_{0,0}|*m*_{0,1}}.
The reverse transformation R transforms any 128-bit input composed of four 32-bits words (A₀| A₁| A₂| A₃) into a 128-bit output (A₃| A₂| A₁| A₀).

Similarly to what was described above for key expansion, in a first embodiment the reversible permutation T may be just defined by the relation T(A') = L(tau(A')) for any 32-bit input A'= (a'ol a'₁| a'₂| a'₃).
and, using the notation (b_{i,0}| b_{i,1}| b_{i,2}| b_{i,3}) = Bi :
*T*(*X'*_{*i*+1}⊕*X'*_{*i*+2}⊕*X'*_{*i*+3}⊕*RK'ᵢ*) = L(Bi) ⊕ *L*(*M*₁*ₓₒᵣ⊕m_{sbox}*|*M*_{1*xor*}⊕*m_{sbox}*|*M*_{1*xor*}⊕*m_{sbox}*|*M*_{1*xor*}⊕*m_{sbox}*).

In such a case, at the end of the first encryption substep, the intermediate result *X'ᵢ*⊕*T*(*X'*_{*i*+1}⊕*X'*_{*i+*2}⊕*X'*_{*i*+3}⊕*RK'ᵢ*) is equal to *X'ᵢ* ⊕ L(Bi) ⊕ *L*(*M*_{1*xor*}⊕*Mₛₚₒₓ*|*M*_{1*xor*}⊕*Mₛₚₒₓ*|*M*_{1*xor*}⊕*Mₛₚₒₓ*|*M*_{1*xor*}⊕*Mₛₚₒₓ*)
and the output *X'*_{*i*+4} can be obtained by performing a partial unmasking consisting in removing the mask
*L*(*M*_{1*xor*}⊕*m_{sbox}*|*M*_{1*xor*}⊕*m_{sbox}*|*M*_{1*xor*}⊕*m_{sbox}*|*M*_{1*xor*}⊕*m_{sbox}*).

Nevertheless, in the first embodiment described above, it may be considered that the masking of L(Bi) is insufficient. Indeed *L*(*M*_{1*xor*}⊕*m_{sbox}*|*M*_{1*xor*}⊕*m_{sbox}*|*M*_{1*xor*}⊕*m_{sbox}*|*M*_{1*xor*}⊕*m_{sbox}*) is not really a 32-bit mask since it is a four times repetition of the same 8-bit mask *M*_{1*xor*}⊕*m_{sbox}.*

Therefore, according to a second embodiment, in the third encryption step E3, the intermediate result may be computed by the electronic device by executing the following sub steps to get an output of the T function masked with a real 32-bit mask:
- computing a partial intermediate result by applying said nonlinear transformation tau to *X'*_{*i*+1}⊕*X'*_{*i*+2}⊕*X'*_{*i*+3}⊕*RK'ᵢ* ;
- computing a transformed partial intermediate result by applying to each byte of the partial intermediate result a mask switch replacing in said byte the mask *M*_{1*xor*} by *m*_{1,(*i*+*b*) *modulo* 4} where b is a byte index of said byte;
- applying said linear transformation L to said transformed partial intermediate result and xoring the output of said linear transformation L with *X'ᵢ*;
In this embodiment, the step of performing a partial unmasking of said intermediate result comprises applying to said intermediate result XOR operations with both L(*m*_{1,*i modulo* 4}|*m*_{1,*i*+1 *modulo*} 4|*m*_{1,*i*+2 *modulo* 4}|*m*_{1,*i*+3 *modulo* 4}) and L(*M_{sbox}*) with M_{sbox} = { *m_{sbox}*|*m_{sbox}*|*m_{sbox}*|*m_{sbox}* }.

### Decryption

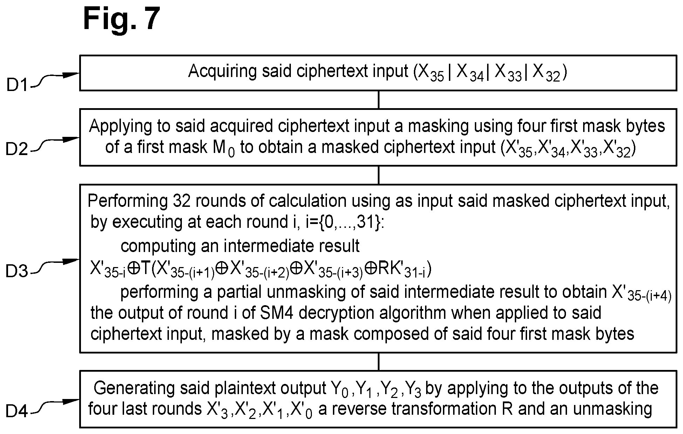

The following paragraphs describe in detail according to a second aspect of the invention the steps performed by the processing system 301 of the electronic device 300 (called hereafter "decryption electronic device"), depicted in **Figure 7**, for securing against side channel attacks said electronic device 300, executing a SM4 decryption algorithm decrypting a 128-bit ciphertext input $\left({X}_{35}\left|{X}_{34}\right.\left|{X}_{33}\right.\left|{X}_{32}\right.\right) ϵ {\left({Z}_{2}^{32}\right)}^{4}$ to obtain a 128-bit plaintext output $\left({Y}_{0}\left|{Y}_{1}\right.\left|{Y}_{3}\right.\left|{Y}_{3}\right.\right) ϵ {\left({Z}_{2}^{32}\right)}^{4}$ using, in 32 decryption rounds, the round keys RKᵢ ∈ ${Z}_{2}^{32}$, i= {0, ...,31} and the substitution box function Sbox.

In a first decryption step D1, the decryption electronic device 300 acquires said ciphertext input (X₃₅| X₃₄| X₃₃| X₃₂) such that *X*₃₅ = {*x*_{35,0}*x*_{35,1}|*x*_{35,2}|*x*_{35,3}}, *X*₃₄ = {*x*_{34,0}|*x*_{34,1}|*x*_{34,2}|*x*_{34,3}}, *X*₃₃ = {*x*_{33,0}|*x*_{33,1}|*x*_{33,2}|*x*_{33,3}}, *X*₃₂ = {*x*_{32,0}|*x*_{32,1}|*x*_{32,2}|*x*_{32,3}}.

In a second decryption step D2, the decryption electronic device 300 applies to said acquired ciphertext input a masking using said four first mask bytes to obtain a masked ciphertext input (X'₃₅, X'₃₄, X'₃₃, X'₃₂) such that: $X {′}_{35} = \left\{{x}_{35 , 0}⊕{m}_{0 , 2}\left|{x}_{35 , 1}⊕{m}_{0 , 3}\right.\left|{x}_{35 , 2}⊕{m}_{0 , 0}\right.\left|{x}_{35 , 3}⊕{m}_{0 , 1}\right.\right\}$ $X {′}_{34} = \left\{{x}_{34 , 0}⊕{m}_{0 , 1}\left|{x}_{34 , 1}⊕{m}_{0 , 2}\right|\left.{x}_{34 , 2}⊕{m}_{0 , 3}\right|{x}_{34 , 3}⊕{m}_{0 , 0}\right\}$ $X {′}_{33} = \left\{{x}_{33 , 0}⊕{m}_{0 , 0}\left|{x}_{33 , 1}⊕{m}_{0 , 1}\right|\left.{x}_{33 , 2}⊕{m}_{0 , 2}\right|{x}_{33 , 3}⊕{m}_{0 , 3}\right\}$ $X {′}_{32} = \left\{{x}_{32 , 0}⊕{m}_{0 , 3}\left|{x}_{32 , 1}⊕{m}_{0 , 0}\right|\left.{x}_{32 , 2}⊕{m}_{0 , 1}\right|{x}_{32 , 3}⊕{m}_{0 , 2}\right\} .$

In a third decryption step D3, the decryption electronic device 300 performs 32 rounds of calculation using as input said masked ciphertext input and said masked SM4 round keys RK'i previously generated as described here above and stored in the computer readable memory circuit of the decryption electronic device, by executing at each round i, i= {0, ...,31} the following decryption substeps.

In a first decryption substep, the electronic device computes an intermediate result *X'*_{35-*i*}⊕*T*(*X'*_{35-(*i*+1)}⊕*X'*_{35-(*i*+2)}⊕*X'*_{35-(*i*+3})⊕*RK'*_{31-*i*}), where T is a reversible permutation that outputs 32 bits from a 32-bit input by composing the linear transformation L described above in the case of encryption and the nonlinear transformation tau described above in the case of key expansion.

The nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)), where SboxM is the substitution function Sbox of state-of-the-art SM4 algorithm, illustrated on Figure 4, masked using said four first mask bytes *m*_{0,0};*m*_{0,1}; *m*_{0,2}; *m*_{0, 3} of the first mask Mo, a second mask M₁ composed of four second mask bytes *m*_{1,0};*m*_{1,1};*m*_{1,2}; *m*_{1, 3} such that M₁ = {*m*_{1,0}|*m*_{1,1}|*m*_{1,2}|*m*_{1,3}}, and a third mask M₂ such that for any 8-bit input x: *SboxM*[*x*⊕*M*_{0*xor*}] *= Sbox*[*x*]⊕*M*_{1*xor*}⊕*m_{sbox}*
with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕*m*_{1,3}, *m_{sbox}* = *M*₂[(*x*⊕*M*_{0*xor*})&3]*,* & being the BITWISE AND logical operator.
The linear transformation L transforms any 32-bit input B into a 32-bit output *L*(*B*) *= B* ⊕ (*B* <<< 2) ⊕ (*B* <<< 10) ⊕ (*B* <<< 18) ⊕ (*B* <<< 24).

Then, in a second decryption substep, at each round i, i= {0, ...,31}, the decryption electronic device performs a partial unmasking of said intermediate result to obtain *X'*_{35-(*i*+4)} the output of round i of SM4 decryption algorithm when applied to said ciphertext input, masked by a mask composed of said four first mask bytes, such that:
*X'*₃₁ *is masked with* {*m*_{0,3}|*m*_{0,0}|*m*_{0,1}|*m*_{0,2}}
*X'*₃₀ *is masked with* {*m*_{0,0}|*m*_{0,1}|*m*_{0,2}|*m*_{0,3}}
··· *X'*₃ *is masked with* {*m*_{0,3}|*m*_{0,0}|*m*_{0,1}|*m*_{0,2}}
*X'*₂ *is masked with* {*m*_{0,0}|*m*_{0,1}|*m*_{0,2}|*m*_{0,3}}
*X'*₁ *is masked with* {*m*_{0,1}|*m*_{0,2}|*m*_{0,3}|*m*_{0,0}}
*X'*₀ *is masked with* {*m*_{0,2}|*m*_{0,3}|*m*_{0,0}|*m*_{0,1}}.

In a fourth decryption step S4, the decryption electronic device 300 generates said plaintext output *Y*₀, *Y*₁, *Y*₂, *Y*₃ by applying to the outputs of the four last rounds *X*'₃, *X*'₂, *X*'₁, *X'*₀ a reverse transformation R and an unmasking of *X'*₃ using a mask {*m*_{0,3}|*m*_{0,0}|*m*_{0,1}|*m*_{0,2}}, an unmasking of *X'*₂ using a mask {*m*_{0,0}|*m*_{0,1}|*m*_{0,2}|*m*_{0,3}} an unmasking of *X'*₁ using a mask {*m*_{0,1}|*m*_{0,2}|*m*_{0,3}|*m*_{0,0}} and an unmasking of *X'*₀ using a mask {*m*_{0,2}|*m*_{0,3}|*m*_{0,0}|*m*_{0,1}}.
The reverse transformation R transforms any 128-bit input composed of four 32-bits words (A₀| A₁| A₂| A₃) into a 128-bit output (A₃| A₂| A₁| A₀).

Similarly as what is described for encryption, in a first embodiment the reversible permutation T may be just defined by the relation T(A') = L(tau(A')) and in the second decryption substep, at each round i, i= {0, ...,31}, the output *X*'_{35-(*i*+4)} can be obtained by performing a partial unmasking consisting in removing the mask *L*(*M*_{1*xor*}⊕*m_{sbox}*|*M*_{1*xor*}⊕*m_{sbox}*|*M*_{1*xor*}⊕*m_{sbox}*|*M*₁ₓₒᵣ⊕*m_{sbox}*)

According to a second embodiment, in the third decryption step D3, the intermediate result may be computed by the electronic device by executing the following sub steps to get an output of the T function masked with a real 32-bit mask:
- computing a partial intermediate result by applying said nonlinear transformation tau to (*X'*_{35-(*i*+1)}⊕*X'*_{35-(*i*+2)}⊕*X'*_{35-(*i*+3)}⊕*RK'*_{31-*i*}) ;
- computing a transformed partial intermediate result by applying to each byte of the partial intermediate result a mask switch replacing in said byte the mask *M*_{1*xor*} by *m*_{1,(*i*+*b*) *modulo* 4} where b is a byte index of said byte;
- applying said linear transformation L to said transformed partial intermediate result and xoring the output of said linear transformation L with *X'*_{35-*i*}.
In this embodiment, the step of performing a partial unmasking of said intermediate result comprises applying to said intermediate result XOR operations with both L(*m*_{1,*i modulo* 4}|*m*_{1,*i*+1 *modulo*} 4|*m*_{1,*i*+2 *modulo* 4}|*m*_{1,*i*+3 *modulo* 4}) and L(*M_{sbox}*) with M_{sbox} = { *m_{sbox}*|*m_{sbox}*|*m_{sbox}*|*m_{sbox}* }.

According to a second aspect, this invention therefore relates also to a computer program product directly loadable into the memory of at least one computer, comprising software code instructions for performing the steps of the method according to the first aspect or second aspect when said product is run on the computer.

According to a third aspect, this invention therefore relates also to a non-transitory computer readable medium storing executable computer code that when executed by an electronic device secures against side channel attacks the electronic device executing a SM4 encryption algorithm encrypting a 128-bit plaintext input $\left({X}_{0}\left|{X}_{1}\right|\left.{X}_{2}\right|{X}_{3}\right) ∈ {\left({Z}_{2}^{32}\right)}^{4}$ to obtain a 128-bit ciphertext output $\left({Y}_{0}\left|{Y}_{1}\right|\left.{Y}_{2}\right|{Y}_{3}\right) ∈ {\left({Z}_{2}^{32}\right)}^{4}$ using, in 32 encryption rounds, round keys ${RK}_{i} ∈ {Z}_{2}^{32}$, i= {0, ...,31} and a substitution box function Sbox,
said electronic device comprising a processing system and a computer readable memory circuit storing masked SM4 round key RK'i,
wherein the first round key RKo is masked with a first mask M₀ composed of four first mask bytes *m*_{0,0};*m*_{0,1};*m*_{0,2}; *m*_{0, 3} such that *M*₀ = {*m*_{0, 3}|*m*_{0,0}|*m*_{0,1}|*m*_{0,2}},
and wherein each of the other round keys RKᵢ is masked with a mask equal to a result of applying a first circular permutation to the four mask bytes of the mask used to the previous round key RKᵢ₋₁, shifting it by 8 bits to the left:
   the computer code comprising computer code for causing the processing system to perform the following steps:
   - acquire said plaintext input (X₀| X₁| X₂| X₃);
   - apply to said acquired plaintext input : (X₀ = {*x*_{0,0}|*x*_{0,1}|*x*_{0,2}|*x*_{0,3}}, *X*₁ = {*x*_{1,0}|*x*_{1,1}|*x*_{1,2}|*x*_{1,3}}, *X*₂ = {*x*_{2,0}|*x*_{2,1}|*x*_{2,2}|*x*_{2,3}}, *X*₃ = {*x*_{3,0}|*x*_{3,1}|*x*_{3,2}|*x*_{3,3}}) a masking using said four first mask bytes to obtain a masked plaintext input (X'₀, X'₁, X'₂, X'₃) such that: $X {′}_{0} = \left\{{x}_{0 , 0}⊗{m}_{0 , 3}\left|{x}_{0 , 1}⊕{m}_{0 , 0}\right|\left.{x}_{0 , 2}⊕{m}_{0 , 1}\right|{x}_{0 , 3}⊕{m}_{0 , 2}\right\}$ $X {′}_{1} = \left\{{x}_{1 , 0}⊗{m}_{0 , 0}\left|{x}_{1 , 1}⊕{m}_{0 , 1}\right|\left.{x}_{1 , 2}⊕{m}_{0 , 2}\right|{x}_{1 , 3}⊕{m}_{0 , 3}\right\}$ $X {′}_{2} = \left\{{x}_{2 , 0}⊗{m}_{0 , 1}\left|{x}_{2 , 1}⊕{m}_{0 , 2}\right|\left.{x}_{2 , 2}⊕{m}_{0 , 3}\right|{x}_{2 , 3}⊕{m}_{0 , 0}\right\}$ $X {′}_{3} = \left\{{x}_{3 , 0}⊗{m}_{0 , 12}\left|{x}_{3 , 1}⊕{m}_{0 , 3}\right|\left.{x}_{3 , 2}⊕{m}_{0 , 0}\right|{x}_{3 , 3}⊕{m}_{0 , 1}\right\} ;$
   - perform 32 rounds of calculation using as input said masked plaintext input, by executing at each round i, i= {0, ...,31}:
      ∘ computing an intermediate result *X'ᵢ*⊕*T*(*X'*_{*i*+1}⊕*X'*_{*i*+2}⊕*X'*_{*i+*3}⊕*RK'ᵢ*), where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),

      where SboxM is said substitution function Sbox masked using said four first mask bytes *m*_{0,0};*m*_{0,1};*m*_{0,2}; *m*_{0, 3} of the first mask Mo, a second mask M₁ composed of four second mask bytes *m*_{1,0};*m*_{1,1};*m*_{1,2}; *m*_{1,3} such that M₁ = {*m*_{1,0}|*m*_{1,1}|*m*_{1,2}|*m*_{1,3}}, and a third mask M₂ such that for any 8-bit input x: *SboxM*[*x*⊕*M*_{0*xor*}] *= Sbox*[*x*]⊕*M*_{1*xor*}⊕*m_{sbox}*,
      with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕*m*_{1,3}, *m_{sbox}* = *M*₂[(*x*⊕*M*_{0*xor*})&3], & being the BITWISE AND logical operator,
      and where the linear transformation L transforms any 32-bit input B into a 32-bit output *L*(*B*) *= B* ⊕ (*B <<<* 2) ⊕ (*B <<<* 10) ⊕ (*B* <<< 18) ⊕ (*B* <<< 24) with B <<< k a 32-bit bitwise cyclic shift of B with k bits shifted left;
         o performing a partial unmasking of said intermediate result to obtain *X'*_{*i*+4} the output of round i of SM4 encryption algorithm when applied to said plaintext input, masked by a mask composed of said four first mask bytes, such that :
            *X'*₄ *is masked with* {*m*_{0,3}|*m*_{0,0}|*m*_{0,1}|*m*_{0,2}}
            *X'*₅ *is masked with* {*m*_{0,0}|*m*_{0,1}|*m*_{0,2}|*m*_{0,3}}
            *X'*₆ *is masked with* {*m*_{0,1}|*m*_{0,2}|*m*_{0,3}|*m*_{0,0}} ...
            *X'*₃₂ *is masked with* {*m*_{0,3}|*m*_{0,0}|*m*_{0,1}|*m*_{0,2}}
            *X'*₃₃ *is masked with* {*m*_{0,0}|*m*_{0,1}|*m*_{0,2}|*m*_{0,3}}
            *X'*₃₄ *is masked with* {*m*_{0,1}|*m*_{0,2}|*m*_{0,3}|*m*_{0,0}}
            *X'*₃₅ *is masked with* {*m*_{0,2}|*m*_{0,3}|*m*_{0,0}|*m*_{0,1}};
   - generate said ciphertext output *Y*₀, *Y*₁, *Y*₂, *Y*₃ by applying to the outputs of the four last rounds *X'*₃₂, *X'*₃₃, *X'*₃₄, *X'*₃₅ a reverse transformation R and an unmasking of *X'₃₂* using a mask {*m*_{0,3}|*m*_{0,0}|*m*_{0,1}|*m*_{0,2}}, an unmasking of *X'*₃₃ using a mask {*m*_{0,0}|*m*_{0,1}|*m*_{0,2}|*m*_{0,3}} an unmasking of *X'*₃₄ using a mask {*m*_{0,1}|*m*_{0,2}|*m*_{0,3}|*m*_{0,0}} and an unmasking of *X'*₃₅ using a mask {*m*_{0,2}|*m*_{0,3}|*m*_{0,0}|*m*_{0,1}},
wherein the reverse transformation R transforms any 128-bit input composed of four 32-bits words (A₀| A₁| A₂| A₃) into a 128-bit output (A₃| A₂| A₁| A₀).

According to a fourth aspect, this invention therefore relates also a non-transitory computer readable medium storing executable computer code that when executed by an electronic device secures against side channel attacks the electronic device executing a SM4 decryption algorithm decrypting a 128-bit ciphertext input $\left(\left.{X}_{35}\right| \left.{X}_{34}\right| \left.{X}_{33}\right| {X}_{32}\right) ∈ {\left({Z}_{2}^{32}\right)}^{4}$ to obtain a 128-bit plaintext output $\left(\left.{Y}_{0}\right| \left.{Y}_{1}\right| \left.{Y}_{2}\right| {Y}_{3}\right) ∈ {\left({Z}_{2}^{32}\right)}^{4}$ using, in 32 decryption rounds, round keys RKᵢ $∈ {Z}_{2}^{32}$, i= {0, ...,31} and a substitution box function Sbox,
said electronic device comprising a processing system and a computer readable memory circuit storing masked SM4 round key RK'i,
wherein the first round key RKo is masked with a first mask M₀ composed of four first mask bytes *m*_{0,0};*m*_{0,1};*m*_{0,2}; *m*_{0, 3} such that *M*₀ = {*m*_{0, 3}|*m*_{0,0}|*m*_{0,1}|*m*_{0,2}},
and wherein each of the other round keys RKᵢ is masked with a mask equal to a result of applying a first circular permutation to the four mask bytes of the mask used to the previous round key RKᵢ₋₁,
the computer code comprising computer code for causing the processing system to perform the following steps:
   - acquire said ciphertext input (X₃₅| X₃₄| X₃₃| X₃₂);
   - apply to said acquired ciphertext input : (*X₃₅* = {*x*_{35,0}|*x*_{35,1}|*x*_{35,2}|*x*_{35,3}}, *X*₃₄ = {*x*_{34,0}|*x*_{34,1}|*x*_{34,2}|*x*_{34,3}}, *X*₃₃ = {*x*_{33,0}|*x*_{33,1}|*x*_{33,2}|*x*_{33,3}}, *X*₃₂ = {*x*_{32,0}|*x*_{32,1}|*x*_{32,2}|*x*_{32,3}}) a masking using said four first mask bytes to obtain a masked ciphertext input (X'₃₅, *X'*₃₄, *X'*₃₃, X'₃₂) such that: $X {′}_{35} = \left\{{x}_{35 , 0}⊕{m}_{0 , 2}\left|{x}_{35 , 1}⊕{m}_{0 , 3}\right.\left|{x}_{35 , 2}⊕{m}_{0 , 0}\right.\left|{x}_{35 , 3}⊕{m}_{0 , 1}\right.\right\}$ $X {′}_{34} = \left\{{x}_{34 , 0}⊕{m}_{0 , 1}\left|{x}_{34 , 1}⊕{m}_{0 , 2}\right.\left|{x}_{34 , 2}⊕{m}_{0 , 3}\right.\left|{x}_{34 , 3}⊕{m}_{0 , 0}\right.\right\}$ $X {′}_{33} = \left\{{x}_{33 , 0}⊕{m}_{0 , 0}\left|{x}_{33 , 1}⊕{m}_{0 , 1}\right.\left|{x}_{33 , 2}⊕{m}_{0 , 2}\right.\left|{x}_{33 , 3}⊕{m}_{0 , 3}\right.\right\}$ $X {′}_{32} = \left\{{x}_{32 , 0}⊕{m}_{0 , 3}\left|{x}_{32 , 1}⊕{m}_{0 , 0}\right.\left|{x}_{32 , 2}⊕{m}_{0 , 1}\right.\left|{x}_{32 , 3}⊕{m}_{0 , 2}\right.\right\} ;$
   - perform 32 rounds of calculation using as input said masked ciphertext input, by executing at each round i, i= {0, ...,31}:
      o computing an intermediate result $X {′}_{35 - i} ⊕ T \left(X{′}_{35 - \left(i+1\right)}⊕X{′}_{35 - \left(i+2\right)}⊕X{′}_{35 - \left(i+3\right)}⊕RK{′}_{31 - i}\right) ,$

      where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),
      where SboxM is said substitution function Sbox masked using said four first mask bytes *m*_{0,0};*m*_{0,1};*m*_{0,2}; *m*_{0, 3} of the first mask Mo, a second mask M₁ composed of four second mask bytes *m*_{1,0};*m*_{1,1};*m*_{1,2}; *m*_{1, 3} such that M₁ = {*m*_{1,0}|*m*_{1,1}|*m*_{1,2}|*m*_{1,3}}, and a third mask M₂ such that for any 8-bit input x: $SboxM \left[x⊕{M}_{0 xor}\right] = Sbox \left[x\right] ⊕ {M}_{1 xor} ⊕ {m}_{sbox}$
      with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕*m*_{1,3}, *m_{sbox}* = *M₂*[(*x*⊕*M*_{0*xor*})&3], & being the BITWISE AND logical operator,
      and where the linear transformation L transforms any 32-bit input B into a 32-bit output *L*(*B*) *= B* ⊕ (*B <<<* 2) ⊕ (*B <<<* 10) ⊕ (*B* <<< 18) ⊕ (*B* <<< 24) with B <<< k a 32-bit bitwise cyclic shift of B with k bits shifted left;
         o performing a partial unmasking of said intermediate result to obtain *X'*_{35-(*i*+4)} the output of round i of SM4 decryption algorithm when applied to said ciphertext input, masked by a mask composed of said four first mask bytes, such that:
            *X'*₃₁ *is masked with* {*m*_{0,3}|*m*_{0,0}|*m*_{0,2}|*m*_{0,2}},
            *X'*₃₀ *is masked with* {*m*_{0,0}|*m*_{0,1}|*m*_{0,2}|*m*_{0,3}}
            ... *X'*₃ *is masked with* {*m*_{0,3}|*m*_{0,0}|*m*_{0,2}|*m*_{0,2}},
            *X'*₂ *is masked with* {*m*_{0,0}|*m*_{0,1}|*m*_{0,2}|*m*_{0,3}}
            *X'*₁ *is masked with* {*m*_{0,1}|*m*_{0,2}|*m*_{0,3}|*m*_{0,0}}
            *X'*₀ *is masked with* {*m*_{0,2}|*m*_{0,3}|*m*_{0,0}|*m*_{0,1}};
   - generate said plaintext output *Y*₀, *Y*₁, *Y*₂, *Y*₃ by applying to the outputs of the four last rounds *X'*₃, X'₂, X'₁, *X'*₀ a reverse transformation R and an unmasking of *X'*₃ using a mask {*m*_{0,3}|*m*_{0,0}|*m*_{0,2}|*m*_{0,2}}, an unmasking of *X'*₂ using a mask {*m*_{0,0}|*m*_{0,1}|*m*_{0,2}|*m*_{0,3}} an unmasking of *X'*₁ using a mask {*m*_{0,1}|*m*_{0,2}|*m*_{0,3}|*m*_{0,0}} and an unmasking of *X'*₀ using a mask {*m*_{0,2}|*m*_{0,3}|*m*_{0,0}|*m*_{0,1}},
wherein the reverse transformation R transforms any 128-bit input composed of four 32-bits words (A₀| A₁| A₂| A₃) into a 128-bit output (A₃| A₂| A₁| A₀).

According to a fifth aspect, this invention therefore relates also an encryption electronic device 300 comprising :
- a processing system 301;
- a computer readable memory circuit 303, 304, 305 configured for storing masked SM4 round keys $RK {′}_{i} ∈ {Z}_{2}^{32}$, i= {0, ...,31},

wherein the processing system performs the following steps to secure against side channel attacks the electronic device executing a SM4 encryption algorithm encrypting a 128-bit plaintext input $\left(\left.{X}_{0}\right| \left.{X}_{1}\right| \left.{X}_{2}\right| {X}_{3}\right) ∈ {\left({Z}_{2}^{32}\right)}^{4}$ to obtain a 128-bit ciphertext output $\left(\left.{Y}_{0}\right| \left.{Y}_{1}\right| \left.{Y}_{2}\right| {Y}_{3}\right) ∈ {\left({Z}_{2}^{32}\right)}^{4}$ using, in 32 encryption rounds, round keys ${RK}_{i} ∈ {Z}_{2}^{32}$, i= {0, ...,31} and a substitution box function Sbox, wherein the first round key RKo is masked with a first mask M₀ composed of four first mask bytes *m*_{0,0};*m*_{0,1};*m*_{0,2}; *m*_{0, 3} such that *M*₀ = {*m*_{0, 3}|*m*_{0,0}|*m*_{0,1}|*m*_{0,2}},
and wherein each of the other round keys RKᵢ is masked with a mask equal to a result of applying a first circular permutation to the four mask bytes of the mask used to the previous round key RKᵢ₋₁ :
   - acquiring said plaintext input (X₀| X₁| X₂| X₃);
   - applying to said acquired plaintext input : (X₀ = {*x*_{0,0}|*x*_{0,1}|*x*_{0,2}|*x*_{0,3}}, *X*₁ = {*x*_{1,0}|*x*_{1,1}|*x*_{1,2}|*x*_{1,3}}, *X*₂ = {*x*_{2,0}|*x*_{2,1}|*x*_{2,2}|*x*_{2,3}}, *X*₃ = {*x*_{3,0}|*x*_{3,1}|*x*_{3,2}|*x*_{3,3}}) a masking using said four first mask bytes to obtain a masked plaintext input (X'₀, X'₁, X'₂, X'₃) such that: $X {′}_{0} = \left\{{x}_{0 , 0}⊕{m}_{0 , 3}\left|{x}_{0 , 1}⊕{m}_{0 , 0}\right.\left|{x}_{0 , 2}⊕{m}_{0 , 1}\right.\left|{x}_{0 , 3}⊕{m}_{0 , 2}\right.\right\}$ $X {′}_{1} = \left\{{x}_{1 , 0}⊕{m}_{0 , 0}\left|{x}_{1 , 1}⊕{m}_{0 , 1}\right.\left|{x}_{1 , 2}⊕{m}_{0 , 2}\right.\left|{x}_{1 , 3}⊕{m}_{0 , 3}\right.\right\}$ $X {′}_{2} = \left\{{x}_{2 , 0}⊕{m}_{0 , 1}\left|{x}_{2 , 1}⊕{m}_{0 , 2}\right.\left|{x}_{2 , 2}⊕{m}_{0 , 3}\right.\left|{x}_{2 , 3}⊕{m}_{0 , 0}\right.\right\}$ $X {′}_{3} = \left\{{x}_{3 , 0}⊕{m}_{0 , 2}\left|{x}_{3 , 1}⊕{m}_{0 , 3}\right.\left|{x}_{3 , 2}⊕{m}_{0 , 0}\right.\left|{x}_{3 , 3}⊕{m}_{0 , 1}\right.\right\} ;$
   - performing 32 rounds of calculation using as input said masked plaintext input, by executing at each round i, i= {0, ...,31}:
      ∘ computing an intermediate result *X'ᵢ*⊕*T*(*X'*_{*i*+1}⊕*X'*_{*i*+2}⊕*X'*_{*i+*3}⊕*RK'ᵢ*),

      where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'₀| b'₁| b'₂| b'₃) = (SboxM(a'₀)| SboxM(a'₁)| SboxM(a'₂)| SboxM(a'₃)),
      where SboxM is said substitution function Sbox masked using said four first mask bytes *m*_{0,0};*m*_{0,1};*m*_{0,2}; *m*_{0,3} of the first mask M₀, a second mask M₁ composed of four second mask bytes *m*_{1,0};*m*_{1,1};*m*_{1,2}; *m*_{1,3} such that M₁ = {*m*_{1,0}|*m*_{1,1}|*m*_{1,2}|*m*_{1,3}}, and a third mask M₂ such that for any 8-bit input x:
         *SboxM*[*x*⊕*M*_{0*xor*}] = *Sbox*[*x*]⊕*M*_{1*xor*}⊕*m_{sbox}*,
      with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕*m*_{1,3}, *m_{sbox}* = *M*₂[(*x*⊕*M*_{0*xor*})&3], & being the BITWISE AND logical operator,
      and where the linear transformation L transforms any 32-bit input B into a 32-bit output *L*(*B*) = *B* ⊕ (*B <<<* 2) ⊕ (*B <<<* 10) ⊕ (*B* <<< 18) ⊕ (*B <<<* 24) with B <<< k a 32-bit bitwise cyclic shift of B with k bits shifted left;
         o performing a partial unmasking of said intermediate result to obtain *X'*_{*i*+4} the output of round i of SM4 encryption algorithm when applied to said plaintext input, masked by a mask composed of said four first mask bytes, such that :
            *X'*₄ *is masked with* {*m*_{0,3}|*m*_{0,0}|*m*_{0,2}|*m*_{0,2}},
            *X'*₅ *is masked with* {*m*_{0,0}|*m*_{0,1}|*m*_{0,2}|*m*_{0,3}}
            *X'*₆ *is masked with* {*m*_{0,1}|*m*_{0,2}|*m*_{0,3}|*m*_{0,0}} ...
            *X'*₃₂ *is masked* with {*m*_{0,3}|*m*_{0,0}|*m*_{0,2}|*m*_{0,2}},
            *X'*₃₃ *is masked with* {*m*_{0,0}|*m*_{0,1}|*m*_{0,2}|*m*_{0,3}}
            *X'*₃₄ *is masked with* {*m*_{0,1}|*m*_{0,2}|*m*_{0,3}|*m*_{0,0}}
            *X'*₃₅ *is masked with* {*m*_{0,2}|*m*_{0,3}|*m*_{0,0}|*m*_{0,1}};
   - generating said ciphertext output *Y*₀, *Y*₁, *Y*₂, *Y*₃ by applying to the outputs of the four last rounds *X'*₃₂, *X'*₃₃, *X'*₃₄, *X'*₃₅ a reverse transformation R and an unmasking of *X'₃₂* using a mask {*m*_{0,3}|*m*_{0,0}|*m*_{0,1}|*m*_{0,2}}, an unmasking of *X'*₃₃ using a mask {*m*_{0,0}|*m*_{0,1}|*m*_{0,2}|*m*_{0,3}} an unmasking of *X'*₃₄ using a mask {*m*_{0,1}|*m*_{0,2}|*m*_{0,3}|*m*_{0,0}} and an unmasking of *X'*₃₅ using a mask {*m*_{0,2}|*m*_{0,3}|*m*_{0,0}|*m*_{0,1}}
wherein the reverse transformation R transforms any 128-bit input composed of four 32-bits words (A₀| A₁| A₂| A₃) into a 128-bit output (A₃| A₂| A₁| A₀).

According to a sixth aspect, this invention therefore relates also a decryption electronic device 300 comprising:
- a processing system 301;
- a computer readable memory circuit 303, 304, 305 configured for storing masked SM4 round keys $RK {′}_{i} ∈ {Z}_{2}^{32}$, i= {0, ...,31},

wherein the processing system performs the following steps to secure against side channel attacks the electronic device executing a SM4 decryption algorithm decrypting a 128-bit ciphertext input $\left(\left.{X}_{35}\right| \left.{X}_{34}\right| \left.{X}_{33}\right| {X}_{32}\right) ∈ {\left({Z}_{2}^{32}\right)}^{4}$ to obtain a 128-bit plaintext output $\left(\left.{Y}_{0}\right| \left.{Y}_{1}\right| \left.{Y}_{2}\right| {Y}_{3}\right) ∈ {\left({Z}_{2}^{32}\right)}^{4}$ using, in 32 decryption rounds, round keys ${RK}_{i} ϵ {Z}_{2}^{32}$, i= {0, ...,31} and a substitution box function Sbox, wherein the first round key RKo is masked with a first mask M₀ composed of four first mask bytes *m*_{0,0};*m*_{0,1};*m*_{0,2}; *m*_{0, 3} such that *M*₀ = {*m*_{0, 3}|*m*_{0,0}|*m*_{0,1}|*m*_{0,2}},
and wherein each of the other round keys RKᵢ is masked with a mask equal to a result of applying a first circular permutation to the four mask bytes of the mask used to the previous round key RKᵢ₋₁, shifting it by 8 bits to the left:
   - acquiring said ciphertext input (X₃₅| X₃₄| X₃₃| X₃₂);
   - applying to said acquired ciphertext input : (*X*₃₅ = {*x*_{35,0}|*x*_{35,1}|*x*_{35,2}|*x*_{35,3}}, *X*₃₄ = {*x*_{34,0}|*x*_{34,1}|*x*_{34,2}|*x*_{34,3}}, *X*₃₃ = {*x*_{33,0}|*x*_{33,1}|*x*_{33,2}|*x*_{33,3}}, *X*₃₂ = {*x*_{32,0}|*x*_{32,1}|*x*_{32,2}|*x*_{32,3}}, a masking using said four first mask bytes to obtain a masked ciphertext input (X'₃₅, *X'*₃₄, *X'*₃₃, X'₃₂) such that: $X {′}_{35} = \left\{{x}_{35 , 0}⊕{m}_{0 , 2}\left|{x}_{35 , 1}⊕{m}_{0 , 3}\right|\left.{x}_{35 , 2}⊕{m}_{0 , 0}\right|{x}_{35 , 3}⊕{m}_{0 , 1}\right\}$ $X {′}_{34} = \left\{{x}_{34 , 0}⊕{m}_{0 , 1}\left|{x}_{34 , 1}⊕{m}_{0 , 2}\right|\left.{x}_{34 , 2}⊕{m}_{0 , 3}\right|{x}_{34 , 3}⊕{m}_{0 , 0}\right\}$ $X {′}_{33} = \left\{{x}_{33 , 0}⊕{m}_{0 , 0}\left|{x}_{33 , 1}⊕{m}_{0 , 1}\right|\left.{x}_{33 , 2}⊕{m}_{0 , 2}\right|{x}_{33 , 3}⊕{m}_{0 , 3}\right\}$ $X {′}_{32} = \left\{{x}_{32 , 0}⊕{m}_{0 , 3}\left|{x}_{32 , 1}⊕{m}_{0 , 0}\right|\left.{x}_{32 , 2}⊕{m}_{0 , 1}\right|{x}_{32 , 3}⊕{m}_{0 , 2}\right\} ;$
   - performing 32 rounds of calculation using as input said masked ciphertext input, by executing at each round i, i= {0, ...,31}:
      o computing an intermediate result $X {′}_{35 - i} ⊕ T \left(X{′}_{35 - \left(i+1\right)}⊕X{′}_{35 - \left(i+2\right)}⊕X{′}_{35 - \left(i+3\right)}⊕RK{′}_{31 - i}\right) ,$

      where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),
      where SboxM is said substitution function Sbox masked using said four first mask bytes m_{0,0}; m_{0,1}; m_{0,2}; m_{0,3} of the first mask M₀, a second mask M₁ composed of four second mask bytes m_{1,0}; m_{1,1}; m_{1,2}; *m*_{1,3} such that M₁ = {m_{1,0} |m_{1,1} |m_{1,2} |m_{1,3}}, and a third mask M₂ such that for any 8-bit input x: $SboxM \left[x⊕{M}_{0 xor}\right] = Sbox \left[x\right] ⊕ {M}_{1 xor} ⊕ {m}_{sbox}$
      with *M*_{0*xor*} = m_{0,0}⊕m_{0,1}⊕m_{0,2}⊕m_{0,3} *M*_{1*xor*} = m_{1,0}⊕m_{1,1}⊕m_{1,2}⊕m_{1,3}, *m_{sbox}* = *M₂*[*(x*⊕*M*_{0*xor*})&3], & being the BITWISE AND logical operator,
      and where the linear transformation L transforms any 32-bit input B into a 32-bit output *L*(*B*) *= B* ⊕ (*B* <<< 2) ⊕ (*B* <<< 10) ⊕ (*B* <<< 18) ⊕ (*B* <<< 24) with B <<< k a 32-bit bitwise cyclic shift of B with k bits shifted left;
         o performing a partial unmasking of said intermediate result to obtain X'₃₅₋₍ᵢ₊₄₎ the output of round i of SM4 decryption algorithm when applied to said ciphertext input, masked by a mask composed of said four first mask bytes, such that:
            *X'*₃₁ *is masked with* {m_{0,3} |m_{0,0} |m_{0,1} |m_{0,2}}
            *X'*₃₀ *is masked with* {m_{0,0} |m_{0,1}|m_{0,2}|m_{0,3}}
            *X*'₃ *is masked with* {m_{0,3} |m_{0,0}|m_{0,1}|m_{0,2}}
            *X'₂ is masked with* {m_{0,0} |m_{0,1} |m_{0,2}|m_{0,3}}
            *X*'₁ *is masked with* {m_{0,1}|m_{0,2}|m_{0,3}|_{m0,0}}
            *X'*₀ *is masked with* {m_{0,2} |m_{0,3} |m_{0,0} |m_{0,1}}
   - generating said plaintext output *Y*₀*, Y*₁*,* Y₂, *Y₃* by applying to the outputs of the four last rounds X'₃, *X'*₂*, X'*₁*, X'*₀ a reverse transformation R and an unmasking of *X*'₃ using a mask {*m*_{0,3}|*m*_{0,0}|*m*_{0,1}|*m*_{0,2}}, an unmasking of *X'₂* using a mask {*m*_{0,01}*m*_{0,1}|*m*_{0,2}|*m*_{0,3}}, an unmasking of *X*'₁ using a mask {*m*_{0,1}|*m*_{0,2}|*m*_{0,3}|*m*_{0,0}} and an unmasking of *X'*₀ using a mask {*m*_{0,2}|*m*_{0,3}|*m*_{0,0} |*m*_{0,1}},
wherein the reverse transformation R transforms any 128-bit input composed of four 32-bits words (Ao| A₁| A₂| A₃) into a 128-bit output (A₃| A₂| A₁| A₀).

According to a seventh aspect, this invention therefore relates also a system comprising the encryption electronic device according to the fifth aspect and the decryption electronic device according to the sixth aspect.

As a result, the methods and devices according to the present invention enable to truly apply a 32-bit masking to any 32-bit word processed throughout all steps SM4 encryption or decryption algorithms, efficiently protecting such algorithms against at least first order side-channel attacks.

## Claims

1. A method for securing against side channel attacks an electronic device (300) executing a SM4 encryption algorithm encrypting a 128-bit plaintext input $\left({X}_{0}\left|{X}_{1}\right|\left.{X}_{2}\right|{X}_{3}\right) ϵ {\left({Z}_{2}^{32}\right)}^{4}$ to obtain a 128-bit ciphertext output (Yo| Y₁| Y₂| $\left.{Y}_{3}\right) ϵ {\left({Z}_{2}^{32}\right)}^{4} using$, in 32 encryption rounds, round keys ${RK}_{i} ϵ {Z}_{2}^{32}$, i= {0, ...,31} and a substitution box function Sbox,
said electronic device comprising a processing system (301) and a computer readable memory circuit (303,304,305) storing masked SM4 round keys RK'i, wherein the first round key RKo is masked with a first mask M₀ composed of four first mask bytes m_{0,0}; m_{0,1}; m_{0,2}; m_{0,3} such that M₀ = {m_{0,3}|m_{0,0} |m_{0,1}|m_{0,2}},
and wherein each of the other round keys RKᵢ is masked with a mask equal to a result of applying a first circular permutation to the four mask bytes of the mask used to mask the previous round key RKᵢ₋₁, shifting it by 8 bits to the left, said processing system of the electronic device performing the following steps:
- acquiring (E1) said plaintext input (Xo| X₁| X₂| X₃);
- applying (E2) to said acquired plaintext input : (X₀ = {x_{0*,*0} |x_{0,1} |x_{0,2}|x_{0,3}): *X*₁ = {*x*_{1,0}|*x*_{1,1}|*x*_{1,2}|x_{1*,*3}): *X₂* = {x_{2,0}|x_{2,1}|x_{2,2}|x_{2,3}}, *X₃* = {*x*_{3,0}|*x*_{3*,*1}|*x_{3,2}*|*x_{3,3}*}) a masking using said four first mask bytes to obtain a masked plaintext input (X'o |X'1| X'₂| X'₃) such that $X {′}_{0} = \left\{{x}_{0 , 0}⊕{m}_{0 , 3}\left|{x}_{0 , 1}⊕{m}_{0 , 0}\right|\left.{x}_{0 , 2}⊕{m}_{0 , 1}\right|{x}_{0 , 3}⊕{m}_{0 , 2}\right\}$ $X {′}_{1} = \left\{{x}_{1 , 0}⊕{m}_{0 , 0}\left|{x}_{1 , 1}⊕{m}_{0 , 1}\right|\left.{x}_{1 , 2}⊕{m}_{0 , 2}\right|{x}_{1 , 3}⊕{m}_{0 , 3}\right\}$ $\begin{matrix}X {′}_{2} = \left\{{x}_{2 , 0}⊕{m}_{0 , 1}\left|{x}_{2 , 1}⊕{m}_{0 , 2}\right|\left.{x}_{2 , 2}⊕{m}_{0 , 3}\right|{x}_{2 , 3}⊕{m}_{0 , 0}\right\} \\ X {′}_{3} = \left\{{x}_{3 , 0}⊕{m}_{0 , 2}\left|{x}_{3 , 1}⊕{m}_{0 , 3}\right|\left.{x}_{3 , 2}⊕{m}_{0 , 0}\right|{x}_{3 , 3}⊕{m}_{0 , 1}\right\} ;\end{matrix}$
- performing 32 rounds of calculation (E3) using as input said masked plaintext input, by executing at each round i, i= {0, ...,31}:
∘ computing an intermediate result *X'ᵢ⊕T*(*X'ᵢ₊₁⊕X'ᵢ₊₂⊕X'ᵢ₊₃⊕RK'ᵢ,*
where T is a reversible permutation that outputs 32 bits from a 32-bit input by composing a linear transformation L and a nonlinear transformation tau,
where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),
where SboxM is said substitution function Sbox masked using said four first mask bytes *m*_{0,0}; *m*_{0,1}; *m*_{0,2}; *m*_{0,3} of the first mask Mo, a second mask M₁ composed of four second mask bytes *m*_{1,0}; *m*_{1,1}; *m*_{1,2}; *m*_{1,3} such that M₁ = {*m*_{1,0}|*m*_{1,1}|*m*_{1,2} |*m*_{1,3}}, and a third mask M₂ such that for any 8-bit input x:
*SboxM*[*x*⊕*M₀ₓₒᵣ*] = *Sbox*[x]*⊕M₁ₓₒᵣ⊕m_{sbox},*
with *M*_{0*xor*} = *m*_{0,0}⊕*m*_{0,1}⊕*m*_{0,2}*m*_{0,3,} *M*_{1*xor*} = *m*_{1,0}⊕*m*_{1,1}⊕*m*_{1,2}⊕*m*_{1,3,} *m_{sbox}* = *M₂*[(x⊕*M₀ₓₒᵣ)*&3], & being the BITWISE AND logical operator,
and where the linear transformation L transforms any 32-bit input B into a 32-bit output *L*(*B*) *= B* ⊕ (*B* <<< 2) ⊕ (*B* <<< 10) ⊕ (*B* <<< 18) ⊕ (*B* <<< 24) with B <<< k a 32-bit bitwise cyclic shift of B with k bits shifted left;
o performing a partial unmasking of said intermediate result to obtain *X'ᵢ₊₄* the output of round i of SM4 encryption algorithm when applied to said plaintext input, masked by a mask composed of said four first mask bytes, such that:
*X'₄ is masked with* {*m*_{0,3} |*m*_{0,0} |*m*_{0,1} |*m*_{0,2}}
*X'*₅ *is masked with* {*m*_{0,0}|*m*_{0,1}|*m*_{0,2}|*m*_{0,3}}
*X'*₆ *is masked with* {*m*_{0,1}|*m*_{0,2}|*m*_{0,3}|*m*_{0,0}} ...
*X'₃₂ is masked with* {*m*_{0,3} |*m*_{0,0} |*m*_{0,1}|*m*_{0,2}}
*X'₃₃ is masked with* {*m*_{0,0}|*m*_{0,1}|*m*_{0,2}|*m*_{0,3}}
*X'*₃₄ *is masked with* {*m*_{0,1}|*m*_{0,2}|*m*_{0,3}|*m*_{0,0}}
*X'*₃₅ *is masked with* {*m*_{0,2} |*m*_{0,3} |*m*_{0,0}|*m*_{0,1}}
- generating (E4) said ciphertext output *Y*₀*, Y*₁*, Y*₂, *Y₃* by applying to the outputs of the four last rounds *X'₃₂, X'₃₃, X'₃₄, X'*₃₅ a reverse transformation R and an unmasking of *X'₃₂* using a mask {m_{0,3}|m_{0,0}|m_{0,1}|m_{0,2}}, an unmasking of *X'₃₃* using a mask {*m*_{0,01}*m*_{0,1}|*m*_{0,2}|*m*_{0,3}}, an unmasking of *X'*₃₄ using a mask {*m*_{0,1}|*m*_{0,2}|*m*_{0,3}|*m*_{0,0}} and an unmasking of *X'*₃₅ using a mask {*m*_{0,2} |*m*_{0,3} |*m*_{0,0} |*m*_{0,1}},
wherein the reverse transformation R transforms any 128-bit input composed of four 32-bits words (Ao| A₁| A₂| A₃) into a 128-bit output (A₃| A₂| A₁| Ao).

2. The method of claim 1, wherein computing an intermediate result comprises:
- computing a partial intermediate result by applying said nonlinear transformation tau to *X'*_{*i+*1} *⊕X'ᵢ₊₂⊕X'ᵢ₊₃⊕RK'i ;*
- computing a transformed partial intermediate result by applying to each byte of the partial intermediate result a mask switch replacing in said byte the mask *M*_{1*xor*} by *m*_{1,*(i+b*) modulo 4} where b is a byte index of said byte;
- applying said linear transformation L to said transformed partial intermediate result and xoring the output of said linear transformation L with *X*'*ᵢ*;
and performing a partial unmasking of said intermediate result comprises applying to said intermediate result XOR operations with both L(m_{1,i modulo 4}|m_{1,i+1modulo 4}|m_{1,i+2 modulo 4}|m_{1,i+3 modulo 4}) and L(*M_{sbox}*) with M_{sbox} = { *m_{sbox}*|*m_{sbox}*|*m_{sbox}*|*m_{sbox}* }.

3. A method for securing against side channel attacks an electronic device (300) executing a SM4 decryption algorithm decrypting a 128-bit ciphertext input $\left(\left.{X}_{35}\right|\left.{X}_{34}\right|\left.{X}_{33}\right|{X}_{32}\right) ∈ {\left({Z}_{2}^{32}\right)}^{4}$ to obtain a 128-bit plaintext output (Y₀| Y₁| Y₂| $\left.{Y}_{3}\right) ∈ {\left({Z}_{2}^{32}\right)}^{4}$ using, in 32 decryption rounds, round keys ${RK}_{i} ∈ {Z}_{2}^{32}$, i= {0, ...,31} and a substitution box function Sbox,
said electronic device comprising a processing system (301) and a computer readable memory circuit (303,304,305) storing masked SM4 round keys RK'i, wherein the first round key RKo is masked with a first mask Mo composed of four first mask bytes *m*_{0,0}; *m*_{0,1}; *m*_{0,2}; *m*_{0,3} such that *M*₀ = {*m*_{0,3}|*m*_{0,0} |*m*_{0,1} |*m*_{0,2}},
and wherein each of the other round keys RKᵢ is masked with a mask equal to a result of applying a first circular permutation to the four mask bytes of the mask used to mask the previous round key RKᵢ₋₁, shifting it by 8 bits to the left, said processing system of the electronic device performing the following steps:
- acquiring (D1) said ciphertext input (X₃₅| X₃₄| X₃₃| X₃₂);
- applying (D2) to said acquired ciphertext input : *(X*₃₅ *=* {*x_{35,0}*|x_{35,1}|x_{35,2}|x_{35,3}} *X*₃₄ = {x_{34,0}|x_{34,1}|x_{34,2}|x_{34,3}} X₃₃ = {X_{33,0}|x_{33,1}|x_{33,2}|x_{33,3}} *X*₃₂ = {x_{32,0}|_{x32,1}|x_{32,2}|_{x32,3}}) a masking using said four first mask bytes to obtain a masked ciphertext input (X'₃₅, *X'₃₄, X'₃₃,* X'₃₂) such that $X {′}_{35} = \left\{{x}_{35 , 0}⊕{m}_{0 , 2}\left|{x}_{35 , 1}⊕{m}_{0 , 3}\right|\left.{x}_{35 , 2}⊕{m}_{0 , 0}\right|{x}_{35 , 3}⊕{m}_{0 , 1}\right\}$ $X {′}_{34} = \left\{{x}_{34 , 0}⊕{m}_{0 , 1}\left|{x}_{34 , 1}⊕{m}_{0 , 2}\right|\left.{x}_{34 , 2}⊕{m}_{0 , 3}\right|{x}_{34 , 3}⊕{m}_{0 , 0}\right\}$ $X {′}_{33} = \left\{{x}_{33 , 0}⊕{m}_{0 , 0}\left|{x}_{33 , 1}⊕{m}_{0 , 1}\right|\left.{x}_{33 , 2}⊕{m}_{0 , 2}\right|{x}_{33 , 3}⊕{m}_{0 , 3}\right\}$ $X {′}_{32} = \left\{{x}_{32 , 0}⊕{m}_{0 , 3}\left|{x}_{32 , 1}⊕{m}_{0 , 0}\right|\left.{x}_{32 , 2}⊕{m}_{0 , 1}\right|{x}_{32 , 3}⊕{m}_{0 , 2}\right\} ;$
- performing 32 rounds of calculation (D3) using as input said masked ciphertext input, by executing at each round i, i= {0, ...,31}:
o computing an intermediate result $X {′}_{35 - i} ⊕ T \left(X{′}_{35 - \left(i+1\right)}⊕X{′}_{35 - \left(i+2\right)}⊕X{′}_{35 - \left(i+3\right)}⊕RK{′}_{31 - i}\right) ,$
where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),
where SboxM is said substitution function Sbox masked using said four first mask bytes *m*_{0,0}; *m*_{0,1}; *m*_{0,2}; *m*_{0,3} of the first mask Mo, a second mask M₁ composed of four second mask bytes *m*_{1,0}; *m*_{1,1}; *m*_{1,2}; *m*_{1,3} such that M₁ = {*m*_{1,0} |*m*_{1,1} |*m*_{1,2} |*m*_{1,3}}, and a third mask M₂ such that for any 8-bit input x: $SboxM \left[x⊕{M}_{0 xor}\right] = Sbox \left[x\right] ⊕ {M}_{1 xor} ⊕ {m}_{sbox}$
with *M*_{0*xor*} = *m*_{0,0}⊕*m*_{0,1}⊕*m*_{0,2}⊕*m*_{0,3} *M*_{1*xor*} = *m*_{1,0}⊕*m*_{1,1}⊕*m*_{1,2}⊕*m*_{1,3}, *m_{sbox}* = *M₂*[*(x*⊕*M*_{0*xor*})&3], & being the BITWISE AND logical operator,
and where the linear transformation L transforms any 32-bit input B into a 32-bit output *L*(*B*) *= B* ⊕ (B <<< 2) ⊕ (*B* <<< 10) ⊕ (*B* <<< 18) ⊕ (*B* <<< 24) with B <<< k a 32-bit bitwise cyclic shift of B with k bits shifted left;
o performing a partial unmasking of said intermediate result to obtain X'₃₅₋₍ᵢ₊₄₎ the output of round i of SM4 decryption algorithm when applied to said ciphertext input, masked by a mask composed of said four first mask bytes, such that:
*X'*₃₁ *is masked with* {*m*_{0,3}|*m*_{0,0}|*m*_{0,1}|*m*_{0,2}}
*X'*₃₀ *is masked with* {*m*_{0,0} |*m*_{0,1}|*m*_{0,2}|*m*_{0,3}}
*X*'₃ *is masked with* {*m*_{0,3}|*m*_{0,0}|*m*_{0,1}|*m*_{0,2}}
X*'₂ is masked with* {*m*_{0,0}|*m*_{0,1}|*m*_{0,2}|*m*_{0,3}}
*X*'₁ *is masked with* {*m*_{0,1}|*m*_{0,2}|*m*_{0,3}|*m*_{0,0}}
*X'*₀ *is masked with* {*m*_{0,2} |*m*_{0,3} |*m*_{0,0} |*m*_{0,1}}
- generating (D4) said plaintext output *Y*₀*, Y*₁*,* Y₂, *Y₃* by applying to the outputs of the four last rounds *X*'₃, *X'*₂*, X'*₁*, X'*₀ a reverse transformation R and an unmasking of *X*'₃ using a mask {*m*_{0,3}|*m*_{0,0}|*m*_{0,1}|*m*_{0,2}}, an unmasking of *X'₂* using a mask {*m*_{0,0}|*m*_{0,1}|*m*_{0,2}|*m*_{0,3}}, an unmasking of *X*'₁ using a mask {*m*_{0,1}|*m*_{0,2}|*m*_{0,3}|*m*_{0,0}} and an unmasking of *X'*₀ using a mask {*m*_{0,2}|*m*_{0,3}|*m*_{0,0}|*m*_{0,1}},
wherein the reverse transformation R transforms any 128-bit input composed of four 32-bits words (Ao| A₁| A₂| A₃) into a 128-bit output (A₃| A₂| A₁| Ao).

4. The method of any of claims 1 to 3, wherein said masked round keys $RK ′ i ∈ {Z}_{2}^{32}$ are derived from masked encryption keys $K ′ i ∈ {Z}_{2}^{32}$ and from masked constant keys $CK ′ i ∈ {Z}_{2}^{32}$, by performing 32 rounds of calculation, wherein :
the masked first encryption key K'o is generated (KE3) by masking a first encryption key Ko with said first mask M₀ = {*m*₀,₃|*m*_{0,0}|*m*_{0,1}|*m*_{0,2}},
the masked encryption keys K'₁, K'₂, K'₃ are generated (KE4) by masking a first encryption key K₁= {K_{1,0} | K_{1,1} | K_{1,2} | K_{1,3} }, a second encryption key K₂= {K_{2,0} | K_{2,1} | K_{2,2} | K_{2,3}} and a third encryption key K₃= {K_{3,0} | K_{3,1} | K_{3,2} | K_{3,3} } using said four first mask bytes such that : $K {′}_{1} = \left\{{K}_{1 , 0}⊕{m}_{0 , 0}\left|{K}_{1 , 1}⊕{m}_{0 , 1}\right.\left|{K}_{1 , 2}⊕{m}_{0 , 2}\right.\left|{K}_{1 , 3}⊕{m}_{0 , 3}\right.\right\}$ $K {′}_{2} = \left\{{K}_{2 , 0}⊕{m}_{0 , 1}\left|{K}_{2 , 1}⊕{m}_{0 , 2}\right.\left|{K}_{2 , 2}⊕{m}_{0 , 3}\right.\left|{K}_{2 , 3}⊕{m}_{0 , 0}\right.\right\}$ $K {′}_{3} = \left\{{K}_{3 , 0}⊕{m}_{0 , 2}\left|{K}_{3 , 1}⊕{m}_{0 , 3}\right.\left|{K}_{3 , 2}⊕{m}_{0 , 0}\right.\left|{K}_{3 , 3}⊕{m}_{0 , 1}\right.\right\} ,$
the masked first constant key CK'o is generated (KE5) by masking a first constant key CKo with said first mask M₀ = {*m*_{0,3}|*m*_{0,0}|*m*_{0,1}|*m*_{0,2}},
each of the other masked constant keys CK'ᵢ is generated (KE5) by masking a constant key CKᵢ = {CK_{i,0} | CK_{i,1} | CK_{i,2} | CK_{i,3}} with a mask equal to a result of applying a first circular permutation to the four bytes of the mask applied to the previous constant key CKᵢ₋₁ such that: $\begin{matrix}CK {′}_{1} = \left\{{CK}_{1 , 0}⊕{m}_{0 , 0}\left|{CK}_{1 , 1}⊕{m}_{0 , 1}\right.\left|{CK}_{1 , 2}⊕{m}_{0 , 2}\right.\left|{CK}_{1 , 3}⊕{m}_{0 , 3}\right.\right\} \\ CK {′}_{2} = \left\{{CK}_{2 , 0}⊕{m}_{0 , 1}\left|{CK}_{2 , 1}⊕{m}_{0 , 2}\right.\left|{CK}_{2 , 2}⊕{m}_{0 , 3}\right.\left|{CK}_{2 , 3}⊕{m}_{0 , 0}\right.\right\} \\ CK {′}_{3} = \left\{{CK}_{3 , 0}⊕{m}_{0 , 2}\left|{CK}_{3 , 1}⊕{m}_{0 , 3}\right.\left|{CK}_{3 , 2}⊕{m}_{0 , 0}\right.\left|{CK}_{3 , 3}⊕{m}_{0 , 1}\right.\right\} \\ … \\ CK {′}_{31} = \left\{{CK}_{31 , 0}⊕{m}_{0 , 2}\left|{CK}_{31 , 1}⊕{m}_{0 , 3}\right.\left|{CK}_{31 , 2}⊕{m}_{0 , 0}\right.\left|{CK}_{31 , 3}⊕{m}_{0 , 1}\right.\right\} ,\end{matrix}$
and wherein: at each round i, i= {0, ...,31} the processing system of the electronic device (KE6):
o computes a key expansion intermediate result:
*K'ᵢ⊕T'(K'ᵢ₊₁⊕K'ᵢ₊₂⊕K'ᵢ₊₃⊕CK'ᵢ),*
where T' is a reversible permutation that outputs 32 bits from a 32-bit input by composing said nonlinear transformation tau and a linear transformation L' transforming any 32-bit input B into a 32-bit output *L'*(*B*) *= B* ⊕ (*B* <<< 13) ⊕ (*B* <<< 23);
o performs a partial unmasking of said key expansion intermediate result to obtain said masked round key RK'ᵢ=K'ᵢ₊₄ equal to the output of round i of SM4 key expansion algorithm when applied to said encryption keys masked by a mask composed of said four first mask bytes, such that *RK*₀ *is masked with* {*m*_{0,3} |*m*_{0,0}|*m*_{0,1}|*m*_{0,2}}
*RK*₁ *is masked with* {*m*_{0,0} |*m*_{0,1}|*m*_{0,2}|*m*_{0,3}}
*RK₂ is masked with* |*m*_{0,1}|*m*_{0,2}|*m*_{0,3}|*m*_{0,0}}
*RK₃ is masked with* {*m*_{0,2}|*m*_{0,3}|*m*_{0,0}|*m*_{0,1}} ...
*RK₃₁ is masked with* {*m*_{0,2}|*m*_{0,3} |*m*_{0,0} |*m*_{0,1}}.

5. The method of claim 4, wherein computing a key expansion intermediate result comprises:
- computing a partial key expansion intermediate result by applying said nonlinear transformation tau to *K'*_{*i*+1}⊕*K'*_{*i*+3}⊕*K'*_{*i*+3}⊕*CK'ᵢ* ;
- computing a transformed partial key expansion intermediate result by applying to each byte of the partial key expansion intermediate result a mask switch replacing in said byte the mask *M*_{1*xor*} by *m*_{1*,*(*i+b*) modulo 4} where b is a byte index of said byte, b= {0, ...,3};
- applying said linear transformation L' to said transformed partial key expansion intermediate result and xoring the output of said linear transformation L' with said masked key *K'ᵢ* ;
and performing a partial unmasking of said key expansion intermediate result comprises applying to said key expansion intermediate result XOR operations with both L'(*m*_{1,i *modulo* 4}|*m*_{1,i+1 *modulo* 4}|*m*_{1,i+2 *modulo* 4}|*m*_{1,i+3 *modulo* 4}) and *L'(M_{sbox})* with M_{sbox} = { *m_{sbox}*|m*_{sbox}*|m*_{sbox}*|*m_{sbox}* }.

6. A computer program product directly loadable into the memory of at least one computer, comprising software code instructions for performing the steps of the method according to any claim 1 to 5 when said product is run on the computer.

7. An encryption electronic device (300) comprising :
- a processing system (301);
- a computer readable memory circuit (303, 304, 305) configured for storing masked SM4 round keys $RK {′}_{i} ∈ {Z}_{2}^{32}$, i= {0, ...,31},
wherein the processing system performs the following steps to secure against side channel attacks the electronic device executing a SM4 encryption algorithm encrypting a 128-bit plaintext input $\left(\left.{X}_{0}\right|\left.{X}_{1}\right|\left.{X}_{2}\right|{X}_{3}\right) ∈ {\left({Z}_{2}^{32}\right)}^{4}$ to obtain a 128-bit ciphertext output $\left(\left.{Y}_{0}\right|\left.{Y}_{1}\right|\left.{Y}_{2}\right|{Y}_{3}\right) ∈ {\left({Z}_{2}^{32}\right)}^{4}$ using, in 32 encryption rounds, round keys ${RK}_{i} ∈ {Z}_{2}^{32}$, i= {0, ...,31} and a substitution box function Sbox,
wherein the first round key RK₀ is masked with a first mask M₀ composed of four first mask bytes *m*_{0,0}; *m*_{0,1}; *m*_{0,2}; *m*_{0,3} such that *M*₀ = {*m*_{0,3}|*m*_{0,0} |*m*_{0,1} |*m*_{0,2}},
and wherein each of the other round keys RKᵢ is masked with a mask equal to a result of applying a first circular permutation to the four mask bytes of the mask used to the previous round key RKᵢ₋₁ shifting it by 8 bits to the left:
- acquiring said plaintext input (Xo| X₁| X₂| X₃);
- applying to said acquired plaintext input : (X₀ = {*x*_{0,0}|*x*_{0,1}*x*_{0*,2*}l*x*_{0,3}}, *X*₁ = {*x_{1,0}*|x_{1,1}|x_{1,2}|x_{1,3}} *X*₂ = {*x*_{2,0}|*x*_{2,1}|*x*_{2,2}|*x*_{2,3}}, *X*₃ = {*x*_{3,0}|x_{3,1}|x_{3,2}|x_{3,3}}) a masking using said four first mask bytes to obtain a masked plaintext input (X'₀, *X'*₁*, X'*₂*,* X'₃) such that: $X {′}_{0} = \left\{\left.{x}_{0 , 0}⊕{m}_{0 , 3}\right|\left.{x}_{0 , 1}⊕{m}_{0 , 0}\right|\left.{x}_{0 , 2}⊕{m}_{0 , 1}\right|{x}_{0 , 3}⊕{m}_{0 , 2}\right\}$ $X {′}_{1} = \left\{\left.{x}_{1 , 0}⊕{m}_{0 , 0}\right|\left.{x}_{1 , 1}⊕{m}_{0 , 1}\right|\left.{x}_{1 , 2}⊕{m}_{0 , 2}\right|{x}_{1 , 3}⊕{m}_{0 , 3}\right\}$ $X {′}_{2} = \left\{\left.{x}_{2 , 0}⊕{m}_{0 , 1}\right|\left.{x}_{2 , 1}⊕{m}_{0 , 2}\right|\left.{x}_{2 , 2}⊕{m}_{0 , 3}\right|{x}_{2 , 3}⊕{m}_{0 , 0}\right\}$ $X {′}_{3} = \left\{\left.{x}_{3 , 0}⊕{m}_{0 , 2}\right|\left.{x}_{3 , 1}⊕{m}_{0 , 3}\right|\left.{x}_{3 , 2}⊕{m}_{0 , 0}\right|{x}_{3 , 3}⊕{m}_{0 , 1}\right\} ;$
- performing 32 rounds of calculation using as input said masked plaintext input, by executing at each round i, i= {0, ...,31}:
∘ computing an intermediate result *X'ᵢ⊕T(X'ᵢ₊₁⊕X'ᵢ₊₂⊕X'ᵢ₊₃⊕RK'ᵢ),* where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),
where SboxM is said substitution function Sbox masked using said four first mask bytes *m*_{0,0}; *m*_{0,1}; *m*_{0,2}; *m*_{0,3} of the first mask Mo, a second mask M₁ composed of four second mask bytes *m*_{1,0}; *m*_{1,1}; *m*_{1,2}; *m*_{1,3} such that M₁ = {*m*_{1,0} |*m*_{1,1} |*m*_{1,2} |*m*_{1,3}}, and a third mask M₂ such that for any 8-bit input x:
*SboxM*[*x⊕M₀ₓₒᵣ*] = *Sbox*[*x*]*⊕M₁ₓₒᵣ⊕m_{sbox,}*
with *M*_{0*xor*} = *m*_{0,0}⊕*m*_{0,1}⊕*m*_{0,2}⊕*m*_{0,3}, *M*_{1*xor*} = *m*_{1,0}⊕*m*_{1,1}⊕*m*_{1,2}⊕*m*_{1,3}, *m_{sbox}* = *M₂*[*(x*⊕*M*_{0*xor*})&3], & being the BITWISE AND logical operator,
and where the linear transformation L transforms any 32-bit input B into a 32-bit output *L*(*B*) *= B* ⊕ (*B* <<< 2) ⊕ (*B* <<< 10) ⊕ (*B* <<< 18) ⊕ (*B* <<< 24) with B <<< k a 32-bit bitwise cyclic shift of B with k bits shifted left;
o performing a partial unmasking of said intermediate result to obtain *X*'ᵢ₊₄ the output of round i of SM4 encryption algorithm when applied to said plaintext input, masked by a mask composed of said four first mask bytes, such that :
*X'₄ is masked with* {*m*_{0,3}|*m*_{0,0} |*m*_{0,1}|*m*_{0,2}}
*X'*₅ *is masked with* {*m*_{0,0}|*m*_{0,1}|*m*_{0,2}|*m*_{0,3}}
*X'*₅ *is masked with* {*m*_{0,1}|*m*_{0,2}|*m*_{0,3}|*m*_{0,0}}
*X'₃₂ is masked with* {*m*_{0,3}|*m*_{0,0} |*m*_{0,1}|*m*_{0,2}}
*X'₃₃ is masked with* {*m*_{0,0}|*m*_{0,1}|*m*_{0,2}|*m*_{0,3}}
*X'*₃₄ *is masked with* {*m*_{0,1}|*m*_{0,2}|*m*_{0,3}|*m*_{0,0}}
*X'*₃₅ *is masked with* {*m*_{0,2} |*m*_{0,3}|*m*_{0,0}|*m*_{0,1}}
- generating said ciphertext output *Y*₀*, Y*₁*, Y*₂, *Y₃* by applying to the outputs of the four last rounds *X*'₃₂, *X'₃₃, X'₃₄, X'*₃₅ a reverse transformation R and an unmasking of *X'₃₂* using a mask {*m*_{0,3}|*m*_{0,0}|*m*_{0,1}|*m*_{0,2}}, an unmasking of *X'₃₃* using a mask {*m*_{0,0}|*m*₀,₁|*m*_{0,2}|*m*_{0,3}}, an unmasking of *X'*₃₄ using a mask {*m*_{0,1}|*m*_{0,2}|*m*_{0,3}|*m*_{0,0}} and an unmasking of *X'*₃₅ using a mask {*m*_{0,2}|*m*_{0,3}|*m*_{0,0}|*m*_{0,1}},
wherein the reverse transformation R transforms any 128-bit input composed of four 32-bits words (Ao| A₁| A₂| A₃) into a 128-bit output (A₃| A₂| A₁| Ao).

8. A decryption electronic device (300) comprising:
- a processing system (301);
- a computer readable memory circuit (303, 304, 305) configured for storing masked SM4 round keys $RK {′}_{i} ∈ {Z}_{2}^{32}$, i= {0, ...,31},
wherein the processing system performs the following steps to secure against side channel attacks the electronic device executing a SM4 decryption algorithm decrypting a 128-bit ciphertext input $\left(\left.{X}_{35}\right|\left.{X}_{34}\right|\left.{X}_{33}\right|{X}_{32}\right) ∈ {\left({Z}_{2}^{32}\right)}^{4}$ to obtain a 128-bit plaintext output $\left(\left.{Y}_{0}\right|\left.{Y}_{1}\right|\left.{Y}_{2}\right|{Y}_{3}\right) ∈ {\left({Z}_{2}^{32}\right)}^{4}$ using, in 32 decryption rounds, round keys ${RK}_{i} ∈ {Z}_{2}^{32}$, i= {0, ...,31} and a substitution box function Sbox, wherein the first round key RKo is masked with a first mask Mo composed of four first mask bytes *m*_{0,0}; *m*_{0,1}; *m*_{0,2}; *m*_{0,3} such that *M*₀ = {*m*_{0,3}|*m*_{0,0} |*m*_{0,1} |*m*_{0,2}},
and wherein each of the other round keys RKᵢ is masked with a mask equal to a result of applying a first circular permutation to the four mask bytes of the mask used to the previous round key RKᵢ₋₁, shifting it by 8 bits to the left:
- acquiring said ciphertext input (X₃₅| X₃₄| X₃₃| X₃₂);
- applying to said acquired ciphertext input : (*X₃₅* = {*x_{35,0}*||*x*_{35,1}|*x*_{35,2}|*x*_{35,3}}*, X*₃₄ = {x_{34,0}|x_{34,1}|x_{34,2}|x_{34,3}} *X*₃₃ = {x_{33,0}|x_{33,1}|X_{33,2}|x_{33,3}}, *X*₃₂ = {x_{32,0}|x_{32,1}|x_{32,2}|x_{32,3}}) a masking using said four first mask bytes to obtain a masked ciphertext input (X'₃₅, *X'₃₄, X'₃₃,* X'₃₂) such that: $X {′}_{35} = \left\{\left.{x}_{35 , 0}⊕{m}_{0 , 2}\right|\left.{x}_{35 , 1}⊕{m}_{0 , 3}\right|\left.{x}_{35 , 2}⊕{m}_{0 , 0}\right|{x}_{35 , 3}⊕{m}_{0 , 1}\right\}$ $X {′}_{34} = \left\{\left.{x}_{34 , 0}⊕{m}_{0 , 1}\right|\left.{x}_{34 , 1}⊕{m}_{0 , 2}\right|\left.{x}_{34 , 2}⊕{m}_{0 , 3}\right|{x}_{34 , 3}⊕{m}_{0 , 0}\right\}$ $X {′}_{33} = \left\{\left.{x}_{33 , 0}⊕{m}_{0 , 0}\right|\left.{x}_{33 , 1}⊕{m}_{0 , 1}\right|\left.{x}_{33 , 2}⊕{m}_{0 , 2}\right|{x}_{33 , 3}⊕{m}_{0 , 3}\right\}$ $X {′}_{32} = \left\{\left.{x}_{32 , 0}⊕{m}_{0 , 3}\right|\left.{x}_{32 , 1}⊕{m}_{0 , 0}\right|\left.{x}_{32 , 2}⊕{m}_{0 , 1}\right|{x}_{32 , 3}⊕{m}_{0 , 2}\right\} ;$
- performing 32 rounds of calculation using as input said masked ciphertext input, by executing at each round i, i= {0, ...,31}:
o computing an intermediate result $X {′}_{35 - i} ⊕ T \left(X{′}_{35 - \left(i+1\right)}⊕X{′}_{35 - \left(i+2\right)}⊕X{′}_{35 - \left(i+3\right)}⊕RK{′}_{31 - i}\right) ,$
where T is a reversible permutation that outputs 32 bits from a 32-bit input by composing a linear transformation L and a nonlinear transformation tau, where the nonlinear transformation tau transforms any 32-bit input A'= (a'ol a'₁| a'₂| a'₃) into a 32-bit output tau(A') = B' = (b'ol b'₁| b'₂| b'₃) = (SboxM(a'₀)| SboxM(a'₁)| SboxM(a'₂)| SboxM(a'₃)),
where SboxM is said substitution function Sbox masked using said four first mask bytes *m*_{0,0}; *m*_{0,1}; *m*_{0,2}; *m*_{0,3} of the first mask M₀, a second mask M₁ composed of four second mask bytes *m*_{1,0}; *m*_{1,1}; *m*_{1,2}; *m*_{1, 3} such that M₁ = {*m*_{1,0} |*m*_{1,1} |*m*_{1,2} |*m*_{1,3}}, and a third mask M₂ such that for any 8-bit input x: $SboxM \left[x⊕{M}_{0 xor}\right] = Sbox \left[x\right] ⊕ {M}_{1 xor} ⊕ {m}_{sbox}$
with *M*_{0*xor*} = *m*_{0,0}⊕*m*_{0,1}⊕*m*_{0,2}⊕*m*_{0,3} *M*_{1*xor*} = *m*_{1,0}⊕*m*_{1,1}⊕*m*_{1,2}⊕*m*_{1,3}, *m_{sbox}* = *M₂*[*(x*⊕*M*_{0*xor*})&3], & being the BITWISE AND logical operator,
and where the linear transformation L transforms any 32-bit input B into a 32-bit output *L*(*B*) *= B* ⊕ (*B* <<< 2) ⊕ (*B* <<< 10) ⊕ (*B* <<< 18) ⊕ (*B* <<< 24) with B <<< k a 32-bit bitwise cyclic shift of B with k bits shifted left;
o performing a partial unmasking of said intermediate result to obtain X'_{35-(*i*+4)} the output of round i of SM4 decryption algorithm when applied to said ciphertext input, masked by a mask composed of said four first mask bytes, such that:
*X'*₃₁ *is masked with* {*m*_{0,3}|*m*_{0,0} |*m*_{0,1} |*m*_{0,2}}
*X'*₃₀ *is masked with* {*m*_{0,0} |*m*_{0,1}|*m*_{0,2}|*m*_{0,3}}
*X*'₃ *is masked with* {*m*_{0,3}|*m*_{0,0}|*m*_{0,1}|*m*_{0,2}}
*X'₂ is masked with* {*m*_{0,0}|*m*_{0,1}|*m*_{0,2}|*m*_{0,3}}
*X*'₁ *is masked with* {*m*_{0,1}|*m*_{0,2}|*m*_{0,3}|*m*_{0,0}}
*X'*₀ *is masked with* {*m*_{0,2} |*m*_{0,3} |*m*_{0,0} |*m*_{0,1}}
- generating said plaintext output *Y*₀*, Y*₁*, Y*₂, *Y₃* by applying to the outputs of the four last rounds *X*'₃, *X'*₂*, X'*₁*, X'*₀ a reverse transformation R and an unmasking of *X*'₃ using a mask {m_{0,3}|m_{0,0} |m_{0,1}|m_{0,2}}, an unmasking of *X'₂* using a mask {*m*_{0,01}*m*_{0,1}|*m*_{0,2}|*m*_{0,3}}, an unmasking of *X*'₁ using a mask {*m*_{0,1}|*m*_{0,2}|*m*_{0,3}|*m*_{0,0}} and an unmasking of *X'*₀ using a mask {*m*_{0,2}|*m*_{0,3}|*m*_{0,0} |*m*_{0,1}},
wherein the reverse transformation R transforms any 128-bit input composed of four 32-bits words (Ao| A₁| A₂| A₃) into a 128-bit output (A₃| A₂| A₁| Ao).

9. A system comprising the encryption electronic device of claim 7 and the decryption electronic device of claim 8.
